# EUROPEAN PATENT SPECIFICATION

(11) **EP 4 543 718 B1**
(45) Date of publication and mention of the grant of the patent: **11.11.2026**
(21) Application number: 22738588.7
(22) Date of filing: 23.06.2022
(51) Int. Cl.: B60T 8/17, B60T 8/18, B60T 8/24, B60T 8/32, B60T 8/171, B60T 8/172

(54) **A METHOD FOR DETERMINING A TRACTOR LONGITUDINAL FORCE THRESHOLD VALUE FOR A TRACTOR LONGITUDINAL RETARDATION FORCE**
VERFAHREN ZUR BESTIMMUNG EINES TRAKTORLÄNGSKRAFTSCHWELLENWERTS FÜR EINE TRAKTORLÄNGSRETARDIERUNGSKRAFT
PROCÉDÉ DE DÉTERMINATION D'UNE VALEUR SEUIL DE FORCE LONGITUDINALE DE TRACTEUR POUR UNE FORCE DE RETARD LONGITUDINALE DE TRACTEUR

(43) Date of publication of application: 30.04.2025
(73) Proprietor: VOLVO TRUCK CORPORATION, 405 08 Göteborg (SE)
(72) Inventor: MÖLLER, Daniel, 416 81 Göteborg (SE); HANSSON, Johan, 411 31 Göteborg (SE); LAINE, Leo, 438 94 Härryda (SE); GELSO, Esteban, 421 51 Göteborg (SE); HJELTE ULMEHAG, Robert, 418 76 Göteborg (SE); FREDRIKSSON, Jonas, 431 40 Mölndal (SE)
(74) Representative: Valea AB
(86) International application number: PCT/EP2022/067170
(87) International publication number: WO 2023/247043

(56) References cited:
- EP-A1- 0 798 615
- WO-A1-2015/052293
- WO-A1-2022/122112
- FR-A1- 2 749 248
- US-A1- 2016 318 421

## Description

### TECHNICAL FIELD

The invention relates to a method for determining a tractor longitudinal force threshold value for a tractor longitudinal retardation force that can be imparted on a tractor of a vehicle combination comprising the tractor and a trailer for retarding the vehicle combination. Moreover, the invention relates to a method for braking a vehicle combination comprising a tractor and a trailer. Additionally, the invention relates to each one of a computer program, a computer readable medium, a control unit and a vehicle combination.

The invention can be applied in heavy-duty vehicles, such as trucks, buses and construction equipment. Although the invention will be described with respect to a vehicle combination comprising a truck, the invention is not restricted to this particular vehicle combination but may also be used for vehicle combinations comprising other vehicles, such as working machines, buses or the like.

### BACKGROUND

A vehicle combination generally comprises a tractor and a trailer. The tractor may comprise a tractor brake assembly and the trailer may comprise a trailer brake assembly in order to ensure that the vehicle combination can be appropriately braked.

It may be desired to brake the vehicle combination by operating the tractor brake assembly but not the trailer brake assembly for braking the vehicle combination. For instance, the tractor may comprise a tractor brake assembly for regenerative braking of the tractor and it may be desired to employ regenerative braking for the tractor solely in order to ensure that a relatively large amount of energy is regenerated when retardation of the vehicle combination is requested.

As another non-limiting example, it may be desired to use only service brakes of the tractor brake assembly when braking the vehicle combination in order to ensure that the trailer brake assembly may be inactive and thereby for instance appropriately cooled. According to its abstract, WO 2022/122112 A1 relates to a method of controlling operation of an articulated vehicle combination, AVC, the AVC comprising a tractor unit comprising a primary prime mover for propulsion of the AVC, a first trailer unit coupled to the tractor unit by a first articulated coupling, a dolly comprising a secondary prime mover, the dolly being coupled to the first trailer unit by a second articulated coupling, and a second trailer unit coupled to the dolly by a third articulated coupling, the method comprising determining at least one property indicative of a stability of the AVC; comparing the property with a predetermined property specific range; and controlling the secondary prime mover to generate a propulsion torque for the AVC when the property is within the predetermined property specific range.

However, braking a vehicle combination by operating only the tractor brake assembly may be associated with certain challenges, such as an increased risk for jack-knifing or swinging out of the trailer.

As may be realized from the above, it would be desirable to gain information indicative of under which conditions a vehicle combination can be braked solely by the tractor.

### SUMMARY

An object of the invention is to provide a method that can provide useful information relating to the braking of a vehicle combination.

The object is achieved by a method according to claim 1.

As such, a first aspect of the present invention relates to a method for determining a tractor longitudinal force threshold value for a tractor longitudinal retardation force that can be imparted on a tractor of a vehicle combination comprising the tractor and a trailer for retarding the vehicle combination.

The trailer has a trailer longitudinal extension in a trailer longitudinal direction, a trailer lateral extension in a trailer lateral direction and a trailer vertical extension in a trailer vertical direction. The trailer longitudinal direction corresponds to an intended direction of travel of the trailer when the vehicle combination is travelling straight ahead, the trailer vertical direction corresponds to a direction of a normal to a planar surface supporting the trailer and the trailer lateral direction being perpendicular to each one of the trailer longitudinal direction and the trailer vertical direction.

The tractor has a tractor longitudinal extension in a tractor longitudinal direction, a tractor lateral extension in a tractor lateral direction and a tractor vertical extension in a tractor vertical direction. The tractor longitudinal direction corresponds to an intended direction of travel of the tractor when the vehicle combination is travelling straight ahead, the tractor vertical direction corresponds to a direction of a normal to a planar surface supporting the tractor and the tractor lateral direction being perpendicular to each one of the tractor longitudinal direction and the tractor vertical direction, wherein the tractor longitudinal retardation force extends in a direction parallel to the tractor longitudinal direction.

The method comprises:
- determining a trailer lateral force value, indicative of a trailer lateral force being or predicted to be imparted on the tractor in the tractor lateral direction, using a trailer lateral force value determination procedure comprising:
- obtaining a trailer mass value indicative of the current mass of the trailer;
- obtaining a longitudinal trailer inclination angle value indicative of the inclination angle, in the trailer longitudinal direction, of the ground supporting the trailer;
- determining a longitudinal gravity force value indicative of a longitudinal gravity force, in the trailer longitudinal direction, imparted on the trailer on the basis of at least the trailer mass value and the longitudinal trailer inclination angle value;
- determining an articulation angle value indicative of a current articulation angle between the tractor longitudinal direction and the trailer longitudinal direction;
- determining the trailer lateral force value using the longitudinal gravity force value and the articulation angle value;
- determining a horizontal friction force value indicative of a possible total horizontal frictional force obtainable between the ground supporting the tractor and ground engaging members of the tractor, and
- determining the tractor longitudinal force threshold value using the trailer lateral force value and the horizontal friction force value.

The method according to the first aspect of the present invention takes the above-mentioned longitudinal gravity force value into account when determining the tractor longitudinal force threshold value. This implies that the tractor longitudinal force threshold value can be determined with an appropriately high level of accuracy which in turn implies an appropriate control of the vehicle combination.

Optionally, the trailer lateral force value determination procedure further comprises:
- obtaining a longitudinal trailer retardation value indicative of a longitudinal trailer retardation being or predicted to be imparted on the trailer;
- determining a longitudinal inertial trailer force value indicative of a longitudinal inertial force, in the trailer lateral direction, imparted on the trailer on the basis of at least the trailer mass value and the longitudinal trailer retardation value, and
- determining the tractor longitudinal force threshold value using also the longitudinal inertial trailer force value.

Taking also the longitudinal inertial trailer force value into account when determining the tractor longitudinal force threshold value may further enhance the accuracy of the tractor longitudinal force threshold value determination.

Optionally, the trailer lateral force value determination procedure further comprises:
- determining a lateral centrifugal force value indicative of a centrifugal force, in the trailer lateral direction, imparted on the trailer on the basis of at least the trailer mass value, and
- determining the trailer lateral force value using also lateral centrifugal force value.

Taking also the lateral centrifugal force value into account when determining the tractor longitudinal force threshold value may further enhance the accuracy of the tractor longitudinal force threshold value determination.

Optionally, the trailer lateral force value determination procedure further comprises:
- obtaining a lateral inclination angle value indicative of the inclination angle, in the trailer lateral direction, of the ground supporting the trailer;
- determining a lateral gravity force value indicative of a lateral gravity force, in the trailer lateral direction, imparted on the trailer on the basis of at least the trailer mass value and the lateral inclination angle value, and
- determining the trailer lateral force value using also the lateral gravity force value.

**If** the trailer is supported by an inclined ground, this may result in a lateral gravity force imparted on the trailer and the above procedural steps may take a lateral gravity force, which lateral gravity force is dependent on an inclination angle in the trailer lateral direction, into account when determining the tractor longitudinal force threshold value.

Optionally, the trailer lateral force value determination procedure further comprises multiplying each force value indicative of a force, in the trailer longitudinal direction, with the sine of the articulation angle value.

Optionally, the trailer lateral force value determination procedure further comprises multiplying each force value indicative of a force, in the trailer lateral direction, with the cosine of the articulation angle value.

Optionally, the tractor comprises an inclination sensor, adapted to determine a longitudinal tractor inclination angle value indicative of the inclination angle, in the tractor longitudinal direction, of the ground supporting the tractor. Moreover, obtaining the longitudinal trailer inclination angle value indicative of the inclination angle, in the trailer longitudinal direction, of the ground supporting the trailer comprises:
- obtaining a speed value indicative of a current speed of the tractor in the tractor longitudinal direction;
- obtaining a distance value indicative of a distance, in the tractor longitudinal direction, between the inclination sensor and a reference point of the trailer, and
- using the speed value and the distance value for determining an elapsed time from a first time instant at which the inclination sensor is located at a certain global position and a second time instant at which the reference point of the trailer is located at the same global position, and
- determining the longitudinal trailer inclination angle value using one or more longitudinal tractor inclination angle values determined by the inclination sensor as well as the elapsed time.

The above procedure implies that the longitudinal trailer inclination angle value may be determined without necessarily requiring that the trailer itself is furnished with an inclination sensor.

Optionally, the tractor comprises a set of ground engaging member axles, wherein the set of ground engaging member axles comprises at least one axle and wherein each ground engaging member axle is connected to individual ground engaging members of the tractor. The method comprises performing the following for each ground engaging member axle in the set of ground engaging member axles:
- on the basis of the trailer lateral force value, determining a trailer axle lateral force value indicative of a trailer lateral force being or predicted to be imparted on the ground engaging member axle;
- determining a horizontal friction force value indicative of a possible total horizontal frictional force obtainable between the ground supporting the tractor and the individual ground engaging members of the ground engaging member axle;
- determining an axle tractor longitudinal force threshold value using the trailer axle lateral force value and the horizontal friction force value, and
summarizing the axle tractor longitudinal force threshold value for each ground engaging member axle in the set of ground engaging member axles in order to obtain the tractor longitudinal force threshold value.

Performing the above steps for each ground engaging member axle may further enhance the accuracy of the method.

Optionally, the step of determining a trailer axle lateral force value indicative of a trailer lateral force being or predicted to be imparted on the ground engaging member axle on the on the basis of the trailer lateral force value comprises using a moment equilibrium equation using the following inputs:
- the trailer lateral force value;
- a distance, in the tractor longitudinal direction, from each ground engaging member axle to the centre of gravity of the tractor, and
- a distance, in the tractor longitudinal direction, from the connection point to the centre of gravity of the tractor.

Optionally, the method comprises performing the following for each ground engaging member of the tractor:
- on the basis of the trailer lateral force value, determining a trailer ground engaging member lateral force value indicative of a trailer lateral force being or predicted to be imparted on the ground engaging member;
- determining a horizontal friction force value indicative of a possible total horizontal frictional force obtainable between the ground supporting the tractor and the ground engaging member;
- determining a ground engaging member tractor longitudinal force threshold value using the trailer ground engaging member lateral force value and the horizontal friction force value, and
summarizing the ground engaging member tractor longitudinal force threshold value for each ground engaging member of the tractor in order to obtain the tractor longitudinal force threshold value.

Performing the above steps for each ground engaging member may further enhance the accuracy of the method.

Optionally, the step of determining a determining a trailer ground engaging member lateral force value indicative of a trailer lateral force being or predicted to be imparted on the ground engaging member on the basis of the trailer lateral force value comprises using a moment equilibrium equation using the following inputs:
- the trailer lateral force value;
- a distance, in the tractor longitudinal direction, from each ground engaging member to the centre of gravity of the tractor, and
- a distance, in the tractor longitudinal direction, from the connection point to the centre of gravity of the tractor.

A second aspect of the present invention relates to a method for braking a vehicle combination comprising a tractor and a trailer, the tractor comprising a tractor brake assembly for regenerative braking of the tractor and the trailer comprising a trailer brake assembly for braking the trailer. The method according to the second aspect of the present invention comprises:
- determining a tractor longitudinal force threshold value using the method according to the first aspect of the present invention, and
- operating the tractor brake assembly so as to provide a braking force being smaller than or equal to the tractor longitudinal force threshold value.

The method according to the second aspect of the present invention implies that the vehicle combination may be braked with an appropriately low risk for undesired operating conditions of the vehicle combination, such as jack-knifing.

Optionally, the method further comprises:
- obtaining a retardation request value indicative of a requested retardation of the vehicle combination;
- determining a requested braking force to be imparted on the vehicle combination on the basis of the retardation request value;
- in response to the requested braking force being smaller than or equal to the tractor longitudinal force threshold value, operating the tractor brake assembly but not the trailer brake assembly for braking the vehicle combination.

The above implies that that the vehicle may be braked by the tractor brake assembly only which in turn implies that the vehicle combination may be braked by regenerative braking.

Optionally, determining a requested braking force to be imparted on the vehicle combination on the basis of the retardation request value further comprises obtaining a tractor mass value indicative of the current mass of the tractor and a trailer mass value indicative of the current mass of the trailer.

Optionally, determining a requested braking force to be imparted on the vehicle combination on the basis of the retardation request value further comprises determining a longitudinal trailer inclination angle value indicative of the inclination angle, in the trailer longitudinal direction, of the ground supporting the trailer.

Optionally, determining a requested braking force to be imparted on the vehicle combination on the basis of the retardation request value further comprises determining a longitudinal tractor inclination angle value indicative of the inclination angle, in the tractor longitudinal direction, of the ground supporting the tractor.

A third aspect of the invention relates to a computer program comprising program code means for performing the method of the first or second aspects of the invention when the program is run on a computer.

A fourth aspect of the invention relates to a computer readable medium carrying a computer program comprising program code means for performing the method of the first or second aspects of the invention when the program product is run on a computer.

A fifth aspect of the invention relates to a control unit configured to perform the method according to the first or second aspects of the invention.

A sixth aspect of the invention relates to a vehicle combination comprising a tractor, a trailer and a control unit according to the fifth aspect of the present invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic plan view of a vehicle combination;
- Fig. 2: is a schematic plan view of a vehicle combination;
- Fig. 3: is a schematic side view of a vehicle combination;
- Fig. 4: is a schematic rear view of a vehicle combination, and
- Fig. 5: is a schematic plan view of a vehicle combination.

### DETAILED DESCRIPTION OF EXAMPLE EMBODIMENTS OF THE INVENTION

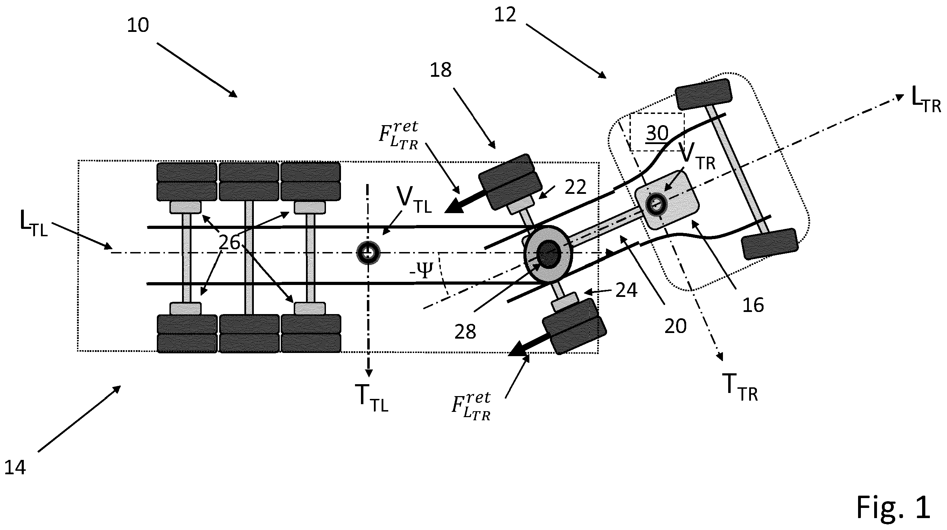

Fig. 1 is a schematic plan view of a vehicle combination 10 comprising a tractor 12 and a trailer 14. Purely by way of example, and as indicated in Fig. 1, the tractor 12 may comprise a propulsion assembly 16 for propelling the tractor 12 and consequently the vehicle combination 10. As a non-limiting example, the propulsion assembly 16 may comprise an electric motor. In the Fig. 1 embodiment, the propulsion assembly 16 is connected to a set of ground engaging members 18 via an arrangement comprising a shaft 20. In Fig. 1, the ground engaging members 18 are implemented as wheels, but it is also envisaged that the ground engaging members 18 may be implemented as crawlers (not shown) or the like. Moreover, it is also contemplated that the propulsion assembly 16 may comprise one or more electric motors each one of which being arranged at the hub of a ground engaging member, such as a wheel, of the tractor 12.

As indicated in Fig. 1, the trailer 14 has a trailer longitudinal extension in a trailer longitudinal direction L_{TL}, a trailer lateral extension in a trailer lateral direction T_{TL} and a trailer vertical extension in a trailer vertical direction V_{TL}. The trailer longitudinal direction L_{TL} corresponds to an intended direction of travel of the trailer 14 when the vehicle combination 10 is travelling straight ahead, the trailer vertical direction V_{TL} corresponds to a direction of a normal to a planar surface supporting the trailer 14 and the trailer lateral direction T_{TL} is perpendicular to each one of the trailer longitudinal direction L_{TL} and the trailer vertical direction V_{TL}.

In a similar vein, and as also indicated in Fig. 1, the tractor 12 has a tractor longitudinal extension in a tractor longitudinal direction L_{TR}, a tractor lateral extension in a tractor lateral direction T_{TR} and a tractor vertical extension in a tractor vertical direction V_{TR}. The tractor longitudinal direction L_{TR} corresponds to an intended direction of travel of the tractor 12 when the vehicle combination 10 is travelling straight ahead, the tractor vertical direction V_{TR} corresponds to a direction of a normal to a planar surface supporting the tractor 12 and the tractor lateral direction T_{TR} is perpendicular to each one of the tractor longitudinal direction L_{TR} and the tractor vertical direction V_{TR}.

Moreover, as indicated in Fig. 1, the tractor 12 may comprise a tractor brake assembly for regenerative braking of the tractor 12. As a non-limiting example, the propulsion assembly 16 may be used for regenerative braking of the tractor 12 and may thus form part of, or even constitute, the tractor brake assembly for regenerative braking of the tractor 12. Thus, when the propulsion assembly 16 is implemented as an electric machine for instance, such an electric machine may function as a generator and generate electric energy to be stored in an electric storage assembly (not shown), such as a battery (not shown). However, it is also contemplated that the tractor brake assembly for regenerative braking of the tractor 12 may comprise, or even be constituted by, one or more electric hub machines 22, 24, each one of which may operate as a generator and generate electric energy to be stored in an electric storage assembly (not shown), such as a battery (not shown).

Moreover, other implementations of the tractor 12 may comprise a tractor brake assembly for braking of the tractor 12 without necessarily having a regeneration capability. For instance, such implementations may comprise one or more service brakes (not shown in Fig. 1).

Irrespective of the implementation the tractor brake assembly is adapted to generate a tractor longitudinal retardation force ${F}_{{L}_{TR}}^{ret}$ extending in a direction parallel to the tractor longitudinal direction L_{TR}.

Moreover, the trailer 14 may comprise a trailer brake assembly 26 for braking the trailer. The trailer brake assembly 26 may comprise one or more service brakes, one or more electric machines for regenerative braking, or any combination thereof.

Furthermore, as indicated in Fig. 1, the trailer 14 is pivotally connected to the trailer 12 via a connection point 28. Such a connection point 28 may for instance be implemented as a so called fifth wheel. Thus, the trailer 14 is connected to the tractor 12 such that an articulation angle Ψ may be formed between the tractor longitudinal direction L_{TR} and the trailer longitudinal direction L_{TL}. Moreover, the above-mentioned articulation angle Ψ may vary, preferably in a stepless manner, depending on for instance the operating condition of the vehicle combination 10. The articulation angle Ψ is indicated with a minus sign in Fig. 1 thereby implying that a negative articulation angle Ψ is assumed in the Fig. 1 condition.

Additionally, Fig. 1 illustrates that the vehicle combination 10 may comprise a control unit 30 configured to perform the method according to the present invention. **In** the Fig. 1 embodiment, the control unit 30 is located in the tractor 12 although other positions of the control unit 30 are also conceivable.

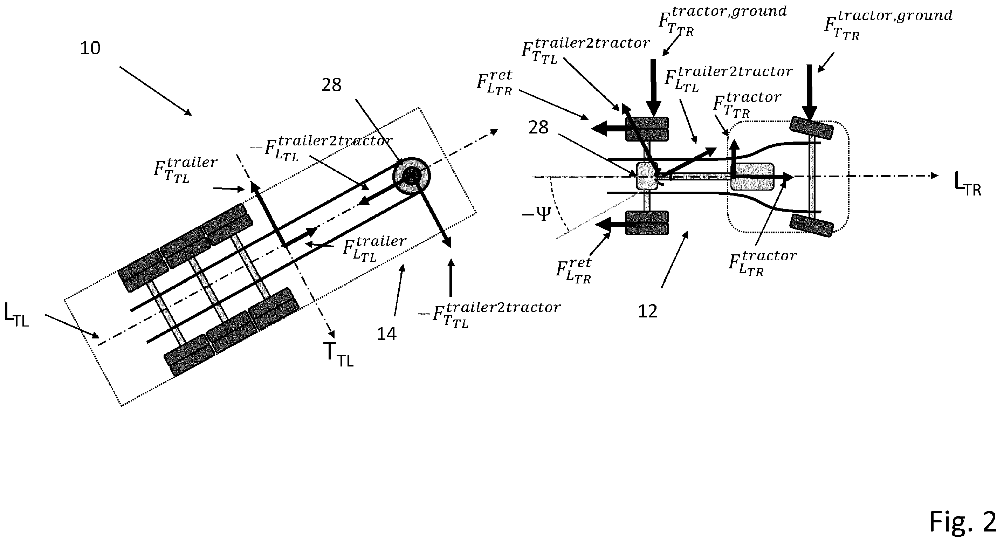

Fig. 2 is a schematic plan view of a vehicle combination 10 being similar to the Fig. 1 vehicle combination 10. **In** Fig. 2, the trailer 12 and the tractor 14 are illustrated at a distance from each other in order to elucidate the forces acting between the tractor 12 and the trailer 14. However, it should be noted that the coupling forces between the tractor 12 and trailer 14 occur when the trailer 14 is connected to the tractor 12 via the connection point 28.

As may be realized from Fig. 2, during driving of the vehicle combination 10, the trailer will be imparted a trailer longitudinal force ${F}_{{L}_{TL}}^{trailer}$, in the trailer longitudinal direction L_{TL}, and a trailer lateral force ${F}_{{T}_{TL}}^{trailer}$, in the trailer lateral direction T_{TL}. Further details of these forces will be presented hereinbelow.

The above-mentioned forces will result in connection forces ${F}_{{L}_{TL}}^{trailer 2 tractor} , {F}_{{T}_{TL}}^{trailer 2 tractor}$ in the trailer longitudinal direction L_{TL} and the trailer lateral direction T_{TL}, respectively, between the tractor 12 and the trailer 14. **It** should be noted that the connection forces ${F}_{{L}_{TL}}^{trailer 2 tractor} , {F}_{{T}_{TL}}^{trailer 2 tractor}$ need not necessarily fully correspond to the trailer longitudinal force ${F}_{{L}_{TL}}^{trailer}$ and the trailer lateral force ${F}_{{T}_{TL}}^{trailer}$, respectively. This is since at least a portion of the trailer longitudinal force ${F}_{{L}_{TL}}^{trailer}$ and/or the trailer lateral force ${F}_{{T}_{TL}}^{trailer}$ may be accommodated by for instance the ground engaging members, such as the wheels, of the trailer 14.

In Fig. 2, the above-mentioned connection forces are presented in relation to the tractor 12 as well as to the trailer 14. Moreover, as indicated in Fig. 2, the connection forces ${F}_{{L}_{TL}}^{trailer 2 tractor} , {F}_{{T}_{TL}}^{trailer 2 tractor}$ are related to the trailer longitudinal direction L_{TL} and the trailer lateral direction T_{TL}, respectively. Consequently, in order to transform the connection forces ${F}_{{L}_{TL}}^{trailer 2 tractor} , {F}_{{T}_{TL}}^{trailer 2 tractor}$ to the tractor longitudinal direction L_{TR} and the tractor lateral direction T_{TR}, respectively, the current articulation angle Ψ may be taken into account.

Moreover, a tractor longitudinal retardation force ${F}_{{L}_{TR}}^{ret}$ imparted on the tractor 12 is illustrated in Fig. 2. Furthermore, a lateral tractor force ${F}_{{T}_{TR}}^{tractor , ground}$, viz a force in the tractor lateral direction T_{TR} imparted on the tractor 12 via the ground engaging members thereof, is indicated in Fig. 2.

The total horizontal forces that can be imparted on the tractor 12 via its ground engaging members, i.e. from the contact between the ground engaging members and the ground supporting the tractor 12, is limited by a total horizontal frictional force ${F}_{total}^{tractor}$ that is obtainable between the ground supporting the tractor and ground engaging members of the tractor 12.

Purely by way of example, the total horizontal frictional force may be determined using the weight ${F}_{{V}_{TR}}^{tractor}$ of the tractor 12, viz the sum of the forces in the tractor vertical direction V_{TR} imparted on the ground engaging members of the tractor from the ground supporting the tractor. The weight ${F}_{{V}_{TR}}^{tractor}$ may be determined by multiplying the total tractor mass *m^{tractor}* by an acceleration value g corresponding to acceleration due to gravity. Moreover, in order to determine the total horizontal frictional force, a friction value µ, indicative of the friction between the set of ground engaging members of tractor 12 and the ground supporting the tractor 12 may be used.

Such a friction value µ may be determined using any known procedure, such as using a sensor (such as a camera) for monitoring the condition of the ground onto which the tractor 12 is travelling and/or by using a brush model or using a slip value associated with the ground engaging members, such as wheels, of the tractor 12.

As such, the total horizontal frictional force ${F}_{total}^{tractor}$ may be determined in accordance with the following: ${F}_{total}^{tractor} = {F}_{{V}_{TR}}^{tractor} ⋅ μ$ Eq. 1

However, it should be noted that the total horizontal frictional force ${F}_{total}^{tractor}$ may be determined in accordance with other procedures as well. Purely by way of example, if the individual friction value µᵢ, indicative of the friction between the one ground engaging members of tractor 12 and the ground supporting the tractor 12, is taken into account, the total horizontal frictional force ${F}_{total}^{tractor}$ may be determined in accordance with the following: ${F}_{total}^{tractor} = {\sum }_{i = 1}^{n} {F}_{{V}_{TR}}^{tractor , i} ⋅ {μ}_{i}$ Eq. 2 where:
${F}_{{V}_{TR}}^{tractor , i}$ is the force in the tractor vertical direction V_{TR} imparted on the i:th ground engaging member of the tractor 12 from the ground supporting the tractor 12, and
*µᵢ* is a friction value indicative of the friction between the i:th ground engaging member of the tractor 12 and the ground supporting the tractor 12.

Purely by way of example, the force in the tractor vertical direction V_{TR} imparted on the i:th ground engaging member of the tractor 12 from the ground supporting the tractor 12 may be determined using information from e.g. a ground engaging suspension arrangement (not shown) of the tractor 12.

As a further alternative, Eq. 3 hereinabove may also be employed for each ground engaging member axle of the tractor 12.

Irrespective of how the total horizontal frictional force ${F}_{total}^{tractor}$ is determined, the following condition should be met in order to avoid slipping and/or sliding of the ground engaging members of the tractor 12: ${\left({F}_{total}^{tractor}\right)}^{2} = {\left({F}_{{L}_{TR}}^{ret}\right)}^{2} + {\left({F}_{{T}_{TR}}^{tractor , ground}\right)}^{2}$ Eq. 3

For the sake of simplicity, Eq. 3 hereinabove relates to the total forces of the tractor 12. However, it should be noted that Eq. 3 can be expanded to ground engaging member axles or even each ground engaging members of the tractor 12.

As such, though purely by way of example, Eq. 3 can be expanded to a tractor 12 comprising a set of ground engaging member axles, wherein the set of ground engaging member axles comprises at least one axle and wherein each ground engaging member axle is connected to individual ground engaging members (such as wheels) of the tractor 12. Assuming that the tractor comprises N axles, Eq. 3 can be expanded in accordance with the following: ${\sum }_{i = 1}^{N} {\left({F}_{total}^{tractor , i}\right)}^{2} = {\sum }_{i = 1}^{N} {\left({F}_{{L}_{TR}}^{ret , i}\right)}^{2} + {\sum }_{i = 1}^{N} {\left({F}_{{T}_{TR}}^{tractor , ground , i}\right)}^{2}$ Eq. 4

Wherein the index i indicates the i:th ground engaging member axle.

In a similar vein, though purely by way of example, Eq. 3 can be expanded to a tractor 12 to each ground engaging member (such as wheel) of the tractor 12. Assuming that the tractor comprises M ground engaging members, Eq. 3 can be expanded in accordance with the following: ${\sum }_{j = 1}^{M} {\left({F}_{total}^{tractor , j}\right)}^{2} = {\sum }_{j = 1}^{M} {\left({F}_{{L}_{TR}}^{ret , j}\right)}^{2} + {\sum }_{j = 1}^{M} {\left({F}_{{T}_{TR}}^{tractor , ground , j}\right)}^{2}$ Eq. 5

Wherein the index j indicates the j:th ground engaging member.

For the sake of brevity, the below examples are mainly based on Eq. 3 hereinabove. However, it should be noted that the below examples can be expanded in a straightforward manner to each one of Eq. 4 and Eq. 5, respectively.

As such, using Eq. 3 as an example, a maximum value of the tractor longitudinal retardation force ${F}_{{L}_{TR}}^{ret , threshold}$, which value hereinafter will be referred to as a tractor longitudinal force threshold value, may be determined in accordance with the following: ${F}_{{L}_{TR}}^{ret , thresold} = \sqrt{{\left({F}_{total}^{tractor}\right)}^{2} - {\left({F}_{{T}_{TR}}^{tractor , ground}\right)}^{2}}$ Eq. 6

Again, the total horizontal frictional force ${F}_{total}^{tractor}$ can for instance be determined in accordance with any one of the procedures mentioned hereinabove.

The lateral tractor force ${F}_{{T}_{TR}}^{tractor , ground}$ is an aggregate of a force ${F}_{{T}_{TR}}^{tractor}$ imparted on the tractor 12, in the tractor lateral direction T_{TR}, as such as well as the connection forces ${F}_{{L}_{TL}}^{trailer 2 tractor} , {F}_{{T}_{TL}}^{trailer 2 tractor}$ between the tractor 12 and the trailer 14. Purely by way of example, the force ${F}_{{T}_{TL}}^{tractor}$ imparted on the tractor 12 as such may be a centrifugal force as will be explained further hereinbelow.

In a similar vein, the connection force ${F}_{{T}_{TL}}^{trailer 2 tractor}$ in the trailer lateral direction T_{TL} may relate to a centrifugal force imparted on the trailer 14. On the other hand, the connection force ${F}_{{L}_{TL}}^{trailer 2 tractor}$ in the trailer longitudinal direction L_{TL} may be related to the mass *m^{trailer}* of the trailer 14 as well as the longitudinal acceleration of the trailer 14. This will also be elaborated on further hereinbelow.

As has been intimated above, in order to transform the connection forces ${F}_{{L}_{TL}}^{trailer 2 tractor}$, ${F}_{{T}_{TL}}^{trailer 2 tractor}$ to the tractor lateral direction T_{TR}, information indicative of the current articulation angle Ψ can be used in accordance with the following: ${F}_{{T}_{TR}}^{tractor , ground} = {F}_{{T}_{TR}}^{tractor} + {F}_{{T}_{TL}}^{trailer 2 tractor} ⋅ cos \left(Ψ\right) + {F}_{{L}_{TL}}^{trailer 2 tractor} ⋅ sin \left(Ψ\right)$ Eq. 7

As may be realized when studying Eq. 6 and Eq. 7 hereinabove, information indicative of the connection forces ${F}_{{L}_{TL}}^{trailer 2 tractor} , {F}_{{T}_{TL}}^{trailer 2 tractor}$ between the tractor 12 and the trailer 14 may be useful information when determining a tractor longitudinal force threshold value ${F}_{{L}_{TR}}^{ret , threshold}$ for a tractor longitudinal retardation force ${F}_{{L}_{TR}}^{ret}$ that can be imparted on a tractor 12 of a vehicle combination 10 comprising the tractor 12 and the trailer 14 for retarding the vehicle combination 10.

The connection forces ${F}_{{L}_{TL}}^{trailer 2 tractor} , {F}_{{T}_{TL}}^{trailer 2 tractor}$ in the trailer longitudinal direction L_{TL} and the trailer transversal direction T_{TL}, respectively, may be transformed to a trailer lateral force value ${F}_{{T}_{TR}}^{trailer 2 tractor}$, indicative of the trailer lateral force being or predicted to be imparted on the tractor in the tractor lateral direction T_{TR}, in accordance with the following: ${F}_{{T}_{TR}}^{trailer 2 tractor} = {F}_{{T}_{TL}}^{trailer 2 tractor} ⋅ cos \left(Ψ\right) + {F}_{{L}_{TL}}^{trailer 2 tractor} ⋅ sin \left(Ψ\right)$ Eq. 8

**In** particular, the inventors of the present invention have realized that the connection force ${F}_{{L}_{TL}}^{trailer 2 tractor}$ in the trailer longitudinal direction L_{TL} can be determined with an appropriate level of accuracy which in turn may improve the accuracy of the determination of the above-mentioned tractor longitudinal force threshold value ${F}_{{L}_{TR}}^{ret , threshold}$.

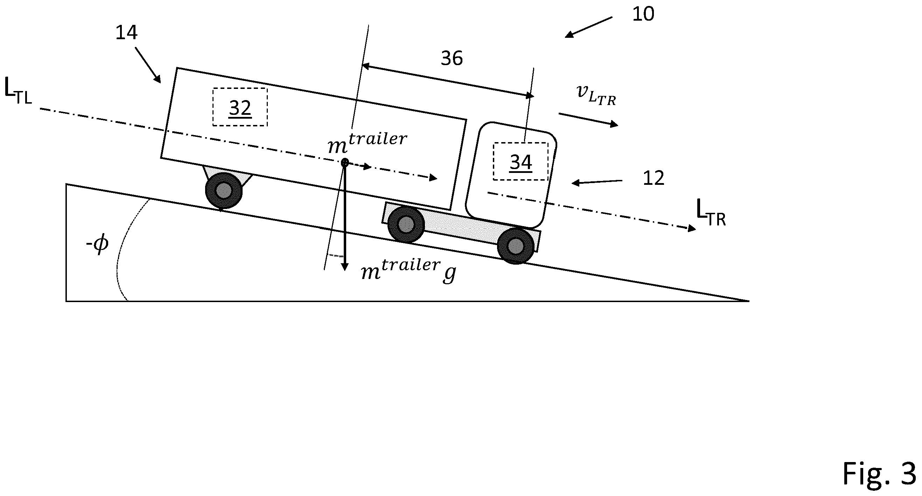

To this end, reference is made to Fig. 3 illustrating a vehicle combination 10 travelling on a slope with an inclination angle -*ϕ*. As may be realized from Fig. 3, the inclination angle -*ϕ* will result in a gravity force imparted on the trailer 14 in the trailer longitudinal direction L_{TL} and the gravity force will thus form part of the connection force ${F}_{{L}_{TL}}^{trailer 2 tractor}$ in the trailer longitudinal direction L_{TL}.

To this end, a first aspect of the present invention relates to a method for determining a tractor longitudinal force threshold value ${F}_{{L}_{TR}}^{ret , threshold}$ for a tractor longitudinal retardation force ${F}_{{L}_{TR}}^{ret}$ that can be imparted on a tractor 12 of a vehicle combination 10 comprising the tractor 12 and a trailer 14 for retarding the vehicle combination 10.

With reference to Fig. 3, the method comprises determining a trailer lateral force value ${F}_{{T}_{TR}}^{trailer 2 tractor}$, see Eq. 8 hereinabove, indicative of a trailer lateral force being or predicted to be imparted on the tractor in the tractor lateral direction T_{TR}. The trailer lateral force value ${F}_{{T}_{TR}}^{trailer 2 tractor}$ is determined using a trailer lateral force value determination procedure comprising the features presented hereinbelow.

The procedure comprises obtaining a trailer mass value mass *m^{trailer}* indicative of the current mass of the trailer 14. Purely by way of example, the trailer mass value mass *m^{trailer}* may be determined using e.g. information from a ground engaging member suspension system (not shown) of the trailer 14. Instead of, or in addition to using information from a ground engaging member suspension system, information indicative of the dead weight of the trailer as well as the current weight of the cargo carried by the trailer 14 may be used.

Moreover, the procedure comprises obtaining a longitudinal trailer inclination angle value *ϕ* indicative of the inclination angle, in the trailer longitudinal direction L_{TL}, of the ground supporting the trailer 14. The inclination angle value *ϕ* may for instance be determined using an inclination sensor 32 of the trailer 14. Alternatively, the inclination angle value *ϕ* may be determined using information from a map system or the like. As such, using information concerning e.g. the topography of the ground using the map system as well as the current location of the trailer 14, which for instance may be determined using a global positioning system (not shown), the inclination angle value *ϕ* may be determined.

Moreover, the method comprises determining a longitudinal gravity force value ${F}_{{L}_{TL}}^{trailer , gravity}$ indicative of a longitudinal gravity force, in the trailer longitudinal direction L_{TL}, imparted on the trailer 14 on the basis of at least the trailer mass value *m^{trailer}* and the longitudinal trailer inclination angle value *ϕ*. As a non-limiting example, the longitudinal gravity force value ${F}_{{L}_{TL}}^{trailer , gravity}$ may be determined in accordance with the following: ${F}_{{L}_{TL}}^{trailer , gravity} = g ⋅ {m}^{trailer} ⋅ sin \left(ϕ\right)$.

Additionally, the procedure comprises determining an articulation angle value Ψ indicative of a current articulation angle between the tractor longitudinal direction L_{TR} and the trailer longitudinal direction L_{TL}. Purely by way of example, the articulation angle value Ψ may be determined using an articulation angle sensor (not shown) of the vehicle combination 10. Purely by way of example, such a sensor may be hosted by the tractor 12. However, it is also envisaged that the articulation angle value Ψ may be determined without the need of an articulation angle sensor. To this end, reference is made to e.g. Eq. 21 hereinbelow.

Furthermore, the method comprises determining the trailer lateral force value ${F}_{{T}_{TR}}^{trailer 2 tractor}$ using the longitudinal gravity force value ${F}_{{L}_{TL}}^{trailer , gravity}$ and the articulation angle value Ψ. As may be realized from Eq. 8 hereinabove, the longitudinal gravity force value ${F}_{{L}_{TL}}^{trailer , gravity}$ can form art of the trailer lateral force value ${F}_{{T}_{TR}}^{trailer 2 tractor}$ since the longitudinal gravity force value ${F}_{{L}_{TL}}^{trailer , gravity}$ forms part of the connection force ${F}_{{L}_{TL}}^{trailer 2 tractor}$ in the trailer longitudinal direction L_{TL} between the tractor 12 and the trailer 14.

Furthermore, with reference to e.g. Eq. 1 or Eq. 2 hereinabove, the method also comprises determining a horizontal friction force value ${F}_{total}^{tractor}$ indicative of a possible total horizontal frictional force obtainable between the ground supporting the tractor 12 and ground engaging members of the tractor 12.

Further, with reference to e.g. Eq. 6 hereinabove, the method also comprises determining the tractor longitudinal force threshold value ${F}_{{L}_{TR}}^{ret , threshold}$ using the trailer lateral force value ${F}_{{T}_{TR}}^{trailer 2 tractor}$ and the horizontal friction force value ${F}_{total}^{tractor}$.

Purely by way of example, the trailer lateral force value determination procedure further comprises obtaining a longitudinal trailer retardation value *r_{LTL}* indicative of a longitudinal trailer retardation being or predicted to be imparted on the trailer 14. Generally, the longitudinal trailer retardation value *r_{LTL}* may be negative, thus indicating a requested retardation, i.e. acceleration in a direction opposite to the trailer longitudinal direction L_{TL}. Purely by way of example, the longitudinal trailer retardation value *r_{LTL}* may be determined using a sensor (not shown) such as an accelerometer (not shown) associated with the trailer 14. However, it is also envisaged that the longitudinal trailer retardation value *r_{LTL}* may be determined in other ways, e.g. using a retardation request signal indicative of a requested retardation of the trailer 14.

Moreover, the trailer lateral force value determination procedure may comprise determining a longitudinal inertial trailer force value ${F}_{{L}_{TL}}^{trailer , inertial}$ indicative of a longitudinal inertial force, in the trailer lateral direction L_{TL}, imparted on the trailer 14 on the basis of at least the trailer mass value *m^{trailer}* and the longitudinal trailer retardation value *r_{LTL}.* Purely by way of example, the longitudinal inertial trailer force value ${F}_{{L}_{TL}}^{trailer , inertial}$ may be determined in accordance with the following: ${F}_{{L}_{TL}}^{trailer , inertial} = {r}_{{L}_{TL}} ⋅ {m}^{trailer}$*.*

Additionally, the trailer lateral force value determination procedure may comprise determining the tractor longitudinal force threshold value ${F}_{{L}_{TR}}^{ret , threshold}$ using also the longitudinal inertial trailer force value ${F}_{{L}_{TL}}^{trailer , inertial}$.

As such, though purely by way of example, the longitudinal inertial trailer force value ${F}_{{L}_{TL}}^{trailer , inertial}$ and the longitudinal gravity force value ${F}_{{L}_{TL}}^{trailer , gravity}$ may be combined in order to form part of, or even constitute, the connection force ${F}_{{L}_{TL}}^{trailer 2 tractor}$ in the trailer longitudinal direction L_{TL} in accordance with the following (see e.g. Eq. 8 hereinabove): ${F}_{{L}_{TL}}^{trailer 2 tractor} = {F}_{{L}_{TL}}^{trailer , gravity} + {F}_{{L}_{TL}}^{trailer , inertial} .$

Furthermore, though purely by way of example, the trailer lateral force value determination procedure may further comprise:
- determining a lateral centrifugal force value ${F}_{{T}_{TL}}^{trailer , centrifugal}$ indicative of a centrifugal force, in the trailer lateral direction T_{TL}, imparted on the trailer 14 on the basis of at least the trailer mass value *m^{trailer}*, and
- determining the trailer lateral force value ${F}_{{T}_{TR}}^{trailer 2 tractor}$ using also lateral centrifugal force value ${F}_{{T}_{TL}}^{trailer , centrifugal}$.

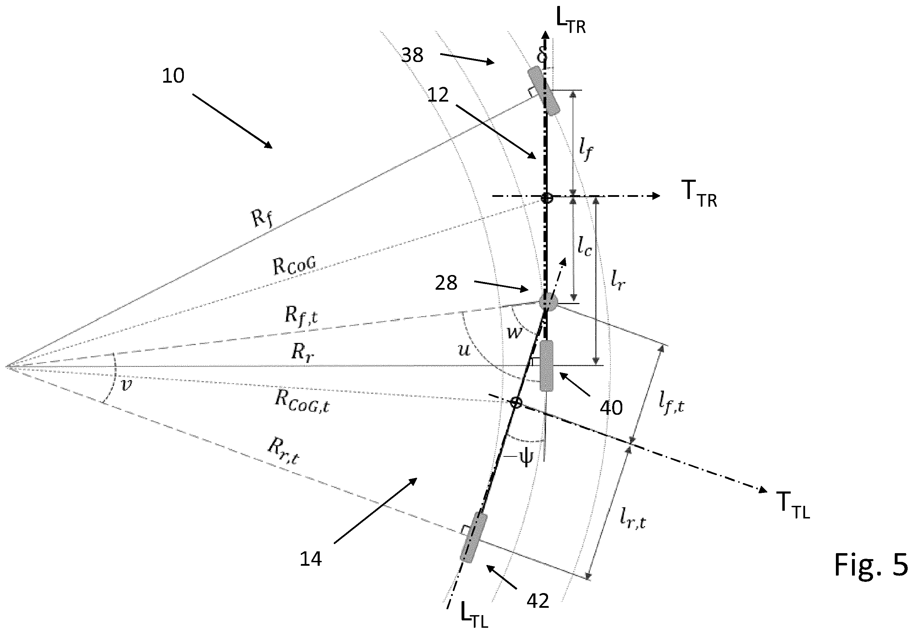

Purely by way of example, the lateral centrifugal force value ${F}_{{T}_{TL}}^{trailer , centrifugal}$ may be determined on the basis of a longitudinal speed value *v_{LTL}* indicative of a speed of the trailer 14 in the trailer longitudinal direction L_{TL} and a trailer curvature radius *R^{trailer}*, indicative of the radius of the curvature of a path that the centre of gravity of the trailer 14 currently is following (see Fig. 5). As a non-limiting example, the lateral centrifugal force value ${F}_{{T}_{TL}}^{trailer , centrifugal}$ may be determined in accordance with the following: ${F}_{{T}_{TL}}^{trailer , centrifugal} = {m}^{trailer} \frac{{v}_{{L}_{TL}}^{2}}{{R}^{trailer}}$ Eq. 9

In a similar vein as for the lateral centrifugal force value ${F}_{{T}_{TL}}^{trailer , centrifugal}$ mentioned above, the force ${F}_{{T}_{TR}}^{tractor}$ imparted on the tractor 12, in the tractor lateral direction T_{TR}, may comprise an addend relating to a lateral centrifugal force value ${F}_{{T}_{TR}}^{tractor , centrifugal}$ indicative of a centrifugal force, in the tractor lateral direction T_{TR}, imparted on the tractor 12 on the basis of at least the tractor mass value *m^{tractor}*, a longitudinal speed value *v_{LTR}* indicative of a speed of the tractor 12 in the tractor longitudinal direction L_{TR} and a tractor curvature radius *R^{tractor}*, indicative of the radius of the curvature of a path that the centre of gravity of the tractor 12 currently is following. Thus, in analogy with Eq. 9 hereinabove, the lateral centrifugal force value ${F}_{{T}_{TR}}^{tractor , centrifugal}$ for the tractor 12 may be determined in accordance with the following: ${F}_{{T}_{TR}}^{tractor , centrifugal} = {m}^{tractor} \frac{{v}_{{L}_{TR}}^{2}}{{R}^{tractor}}$ Eq. 10

In embodiments of the present invention, the longitudinal speed value *v_{LTR}* indicative of a speed of the tractor 12 in the tractor longitudinal direction L_{TR} may be determined using a speed sensor (not shown) of the tractor 12. Moreover, though purely by way of example, in embodiments of the present invention the longitudinal speed value *v_{LTL}* indicative of a speed of the trailer 14 in the trailer longitudinal direction L_{TL} may be set so as to equal the longitudinal speed value *v_{LTR}* indicative of a speed of the tractor 12 in the tractor longitudinal direction L_{TR}.

Going back to the lateral centrifugal force value of the trailer 14, though purely by way of example, the lateral centrifugal force value ${F}_{{T}_{TL}}^{trailer , centrifugal}$ for the trailer 14 may form part of, or even constitute, the connection force ${F}_{{T}_{TL}}^{trailer 2 tractor}$ in the trailer transversal direction T_{TL} in accordance with the following (see e.g. Eq. 8 hereinabove): ${F}_{{T}_{TL}}^{trailer 2 tractor} = C ⋅ {F}_{{T}_{TL}}^{trailer , centrifugal} .$ Eq. 11

It should be noted that that only a portion of the lateral centrifugal force value ${F}_{{T}_{TL}}^{trailer , centrifugal}$ may be added to the trailer lateral force value ${F}_{{T}_{TR}}^{trailer 2 tractor}$. As such, the factor C in Eq. 11 hereinabove may be within the range of 0 to 1. Here, it should be noted that the ground engaging members of the trailer 14 may accommodate a portion of the lateral centrifugal force imparted on the trailer 14. As such, though purely by way of example, the portion of the lateral centrifugal force that will be imparted on the connection point 28 may be determined by means of a moment equilibrium equation taking the distance, in the trailer longitudinal direction L_{TL}, between the ground engaging members of the trailer 14 and the centre of gravity of the trailer, as well as the distance, in the trailer longitudinal direction L_{TL}, between the connection point 28 and the centre of gravity of the trailer 14 into account. To this end, reference is made to Eq. 29 hereinbelow presenting an example of how the above-mentioned distances may be taken into account.

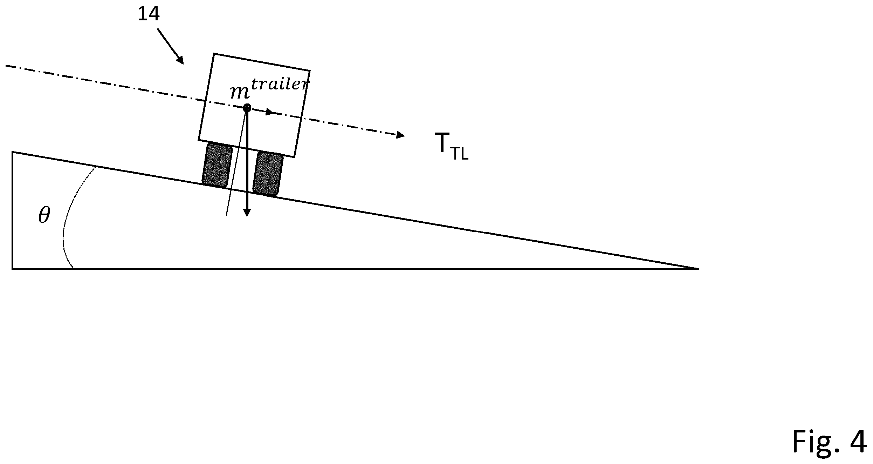

However, it should also be noted that, though purely by way of example, the trailer lateral force value determination procedure may further comprise obtaining a lateral inclination angle value *θ* indicative of the inclination angle, in the trailer lateral direction T_{TL}, of the ground supporting the trailer 14. To this end, reference is made to Fig. 4 illustrating an implementation of a trailer 14 located on a transversally inclined slope.

As such, though purely by way of example, the trailer lateral force value determination procedure may comprise determining a lateral gravity force value ${F}_{{T}_{TL}}^{trailer , gravity}$ indicative of a lateral gravity force, in the trailer lateral direction T_{TL}, imparted on the trailer 14 on the basis of at least the trailer mass value *m^{trailer}* and the lateral inclination angle value *θ*. Moreover, the procedure may further comprise determining the trailer lateral force value using also the lateral gravity force value ${F}_{{T}_{TL}}^{trailer , gravity}$*.* As such, though purely by way of example, Eq. 11 hereinabove may be extended in accordance with the following: ${F}_{{T}_{TL}}^{trailer 2 tractor} = C ⋅ \left({F}_{{T}_{TL}}^{trailer , centrifugal}+{F}_{{T}_{TL}}^{trailer , gravity}\right) .$ Eq. 12

Again, the factor C in Eq. 12 may be within the range of 0 to 1 and may relate to the distances, in the trailer longitudinal direction L_{TL}, between the ground engaging members of the trailer 14, the centre of gravity of the trailer 14, and the connection point 28. As has been indicated hereinabove with reference to Eq. 7 for example, the trailer lateral force value determination procedure may further comprise multiplying each force value indicative of a force, in the trailer longitudinal direction L_{TL}, with the sine of the articulation angle value Ψ. In a similar vein, again with reference to Eq. 7 for example, the trailer lateral force value determination procedure may further comprise multiplying each force value indicative of a force, in the trailer lateral direction T_{TL}, with the cosine of the articulation angle value Ψ.

As has been intimated above, the longitudinal trailer inclination angle value *ϕ* may for instance be determined using an inclination sensor 32 of the trailer 14. However, alternatively, the longitudinal trailer inclination angle value *ϕ* may be determined using an inclination sensor 34 hosted by the tractor 12 as will be elaborated on hereinbelow. As such, the tractor 12 may comprise an inclination sensor 34, adapted to determine a longitudinal tractor inclination angle value *ϕ*' indicative of the inclination angle, in the tractor longitudinal direction L_{TR}, of the ground supporting the tractor 12. Moreover, with reference to Fig. 3, obtaining the longitudinal trailer inclination angle value *ϕ* indicative of the inclination angle, in the trailer longitudinal direction L_{TL}, of the ground supporting the trailer 14 may comprise:
- Obtaining a speed value *v_{LTR}* indicative of a current speed of the tractor 12 in the tractor longitudinal direction L_{TR}.
- Obtaining a distance value 36 indicative of a distance, in the tractor longitudinal direction L_{TR}, between the inclination sensor 34 and a reference point of the trailer 14. Purely by way of example, and as indicated in Fig. 3, the reference point may be the centre of gravity of the trailer 14.
- Using the speed value *v_{LTR}* and the distance value 36 for determining an elapsed time Δt from a first time instant *t*₁ at which the inclination sensor 34 is located at a certain global position and a second time instant *t*₂ at which the reference point of the trailer is located at the same global position.
- Determining the longitudinal trailer inclination angle value *ϕ* using one or more longitudinal tractor inclination angle values *ϕ*' determined by the inclination sensor 34 as well as the elapsed time Δ*t*.

As has been intimated hereinabove, the above examples are generally based on Eq. 3 such that the methods are carried on a tractor level. However, as has been intimated above, e.g. with reference to Eq. 4, embodiments may also be performed on a ground engaging member axle level. As such, when a tractor 12 comprises a set of ground engaging member axles, wherein the set of ground engaging member axles comprises at least one axle and wherein each ground engaging member axle is connected to individual ground engaging members of the tractor 12, the method according to the present invention may comprise performing the following for each ground engaging member axle in the set of ground engaging member axles:
- on the basis of the trailer lateral force value ${F}_{{T}_{TR}}^{trailer 2 tractor}$, determining a trailer axle lateral force value ${F}_{{T}_{TR}}^{trailer 2 tractor , axle}$ indicative of a trailer lateral force being or predicted to be imparted on the ground engaging member axle;
- determining a horizontal friction force value ${F}_{total}^{tractor , axle}$ indicative of a possible total horizontal frictional force obtainable between the ground supporting the tractor 12 and the individual ground engaging members of the ground engaging member axle, and
- determining an axle tractor longitudinal force threshold value ${F}_{{L}_{TR}}^{ret , threshold , axle}$ using the trailer axle lateral force value ${F}_{{T}_{TR}}^{trailer 2 tractor , axle}$ and the horizontal friction force value ${F}_{total}^{tractor , axle}$.

Moreover, the method may further comprise summarizing the axle tractor longitudinal force threshold value ${F}_{{L}_{TR}}^{ret , threshold , axle}$ for each ground engaging member axle in the set of ground engaging member axles in order to obtain the tractor longitudinal force threshold value ${F}_{{L}_{TR}}^{ret , threshold}$.

Furthermore, though purely by way of example, the step of determining a trailer axle lateral force value ${F}_{{T}_{TR}}^{trailer 2 tractor , axle}$ indicative of a trailer lateral force being or predicted to be imparted on the ground engaging member axle on the on the basis of the trailer lateral force value ${F}_{{T}_{TR}}^{trailer 2 tractor}$ may comprise using a moment equilibrium equation using the following inputs:
- the trailer lateral force value ${F}_{{T}_{TR}}^{trailer 2 tractor}$;
- a distance I_{f}, Iᵣ (see Fig. 5), in the tractor longitudinal direction L_{TR}, from each ground engaging member axle to the centre of gravity of the tractor 12, and
- a distance I_{c} (see Fig. 5), in the tractor longitudinal direction L_{TR}, from the connection point 28 to the centre of gravity of the tractor 12.

An example of the use of a moment equilibrium equation in accordance with the above is presented in Eq. 31 and Eq. 32 hereinbelow. These equations are applicable for a tractor comprising two axles but similar equations can be derived for any number of axles.

In a similar vein, though purely by way of example, embodiments may also be performed on a ground engaging member level. As such, embodiments of the present invention may comprise performing the following for each ground engaging member of the tractor 12:
- on the basis of the trailer lateral force value ${F}_{{T}_{TR}}^{trailer 2 tractor}$, determining a trailer ground engaging member lateral force value ${F}_{{T}_{TR}}^{trailer 2 tractor , gem}$ indicative of a trailer lateral force being or predicted to be imparted on the ground engaging member;
- determining a horizontal friction force value ${F}_{total}^{tractor , gem}$ indicative of a possible total horizontal frictional force obtainable between the ground supporting the tractor 12 and the ground engaging member, and
- determining a ground engaging member tractor longitudinal force threshold value ${F}_{{L}_{TR}}^{ret , threshold , gem}$ using the trailer ground engaging member lateral force value ${F}_{{T}_{TR}}^{trailer 2 tractor , gem}$ and the horizontal friction force value ${F}_{total}^{tractor , gem}$.

As for the above example for determining the trailer axle lateral force values, the step of determining a trailer ground engaging member lateral force value ${F}_{{T}_{TR}}^{trailer 2 tractor , gem}$ indicative of a trailer lateral force being or predicted to be imparted on the ground engaging member on the basis of the trailer lateral force value ${F}_{{T}_{TR}}^{trailer 2 tractor}$ may comprise using a moment equilibrium equation using the following inputs:
- the trailer lateral force value ${F}_{{T}_{TR}}^{trailer 2 tractor}$;
- a distance I_{f}, Iᵣ, in the tractor longitudinal direction L_{TR}, from each ground engaging member to the centre of gravity of the tractor 12, and
- a distance I_{c}, in the tractor longitudinal direction L_{TR}, from the connection point 28 to the centre of gravity of the tractor 12.

An example of the use of a moment equilibrium equation in accordance with the above is presented in Eq. 31 and Eq. 32 hereinbelow. Although, these example equations are used for ground engaging member axles, the equations can be expanded in a straightforward manner to each ground engaging member of a tractor 12.

Moreover, the method may further comprise summarizing the ground engaging member tractor longitudinal force threshold value ${F}_{{L}_{TR}}^{ret , threshold , gem}$ for each ground engaging member of the tractor 12 in order to obtain the tractor longitudinal force threshold value ${F}_{{L}_{TR}}^{ret , threshold}$*.*

It is also envisaged that embodiments of the present invention may use combination of the above indicated ground engaging member axle level approach and the ground engaging member level approach. Purely by way of example, it is conceived that embodiments of the present invention may use the ground engaging member axle level approach for certain axles of a tractor and the ground engaging member level approach for the remaining ground engaging members of a tractor 12.

Irrespective of how the of the tractor longitudinal force threshold value ${F}_{{L}_{TR}}^{ret , threshold}$ has been determined, it is preferably used in a method for braking a vehicle combination 10 comprising a tractor 12 and a trailer 14. The tractor comprises a tractor brake assembly for regenerative braking of the tractor and the trailer comprises a trailer brake assembly for braking the trailer.

The method comprises:
- determining a tractor longitudinal force threshold value ${F}_{{L}_{TR}}^{ret , threshold}$ using the method according to the first aspect of the present invention, for instance in accordance with any one of the embodiments presented hereinabove, and
- operating the tractor brake assembly so as to provide a braking force being smaller than or equal to the tractor longitudinal force threshold value ${F}_{{L}_{TR}}^{ret , threshold}$.

As a non-limiting example, the method for braking a vehicle combination 10 may further comprise:
- Obtaining a retardation request value *r_{req}* indicative of a requested retardation of the vehicle combination 10.
- Determining a requested braking force *F^{ret,request}* to be imparted on the vehicle combination 10 on the basis of the retardation request value *r_{req}.*
- In response to the requested braking force *F^{ret,request}* being smaller than or equal to the force tractor longitudinal force threshold value ${F}_{{L}_{TR}}^{ret , threshold}$, operating the tractor brake assembly but not the trailer brake assembly for braking the vehicle combination 10.

The requested braking force *F^{ret,request}* may be determined in a plurality of different ways.

However, as a non-limiting example, determining a requested braking force *F^{ret,request}* to be imparted on the vehicle combination 10 on the basis of the retardation request value *r_{req}* may comprise obtaining a tractor mass value *m^{tractor}* indicative of the current mass of the tractor and a trailer mass value *m^{trailer}* indicative of the current mass of the trailer.

Purely by way of example, the requested braking force ${F}_{{L}_{TR}}^{ret , request}$ may be expressed as a force in the tractor longitudinal direction L_{TR} and may be determined in accordance with the *following :* ${F}_{{L}_{TR}}^{ret , request} = \left({m}^{tractor}+{m}^{trailer}\right) ⋅ {r}_{{L}_{TL}} + {F}_{{L}_{TR}}^{resistance}$.

The force term ${F}_{{L}_{TR}}^{resistance}$ may relate to resistance from e.g. drag loads imparted on the vehicle combination 10.

Moreover, determining the requested braking force *F^{ret,request}* to be imparted on the vehicle combination 10 on the basis of the retardation request value *r_{req}* may further comprise determining a longitudinal trailer inclination angle value indicative of the inclination angle, in the trailer longitudinal direction, of the ground supporting the trailer.

Optionally, determining a requested braking force to be imparted on the vehicle combination on the basis of the retardation request value further may comprise determining a longitudinal tractor inclination angle value indicative of the inclination angle, in the tractor longitudinal direction, of the ground supporting the tractor.

Fig. 5 is a schematic plan view of a vehicle combination 10 comprising a tractor 12 and a trailer 14. In the specific embodiment of the vehicle combination illustrated in Fig. 5, the tractor 12 comprises two sets of wheels, viz a front set of wheels 38 and a rear set of wheels 40. Purely by way of example, the front set of wheels 38 may be steerable, and may thus have a variable steering angle *δ*, but the rear set of wheels 40 need not necessarily be steerable.

The implementation of the trailer 14 illustrated in Fig. 5 comprises a set of wheels 42 and the trailer 14 is pivotally connected to the tractor 12 via a connection point 28. Moreover, Fig. 5 indicates the following distances:
- I_{f}: being the distance, in the tractor longitudinal direction L_{TR}, from the front set of wheels 38 to the centre of gravity of the tractor 12;
- Iᵣ: being the distance, in the tractor longitudinal direction L_{TR}, from the rear set of wheels 40 to the centre of gravity of the tractor 12;
- I_{c}: being the distance, in the tractor longitudinal direction L_{TR}, from the connection point 28 to the centre of gravity of the tractor 12;
- I_{f,t}: being the distance, in the trailer longitudinal direction L_{TL}, from the connection point 28 to the centre of gravity of the trailer 14;
- I_{r,t}: being the distance, in the trailer longitudinal direction L_{TL}, from the connection point 28 to the set of wheels 42 of the trailer 14;
- *R_{f}*: being the turning radius of the front set of wheels 38;
- *Rᵣ*: being the turning radius of the rear set of wheels 40;
- *R_{f,t}*: being the turning radius of the connection point 28, and
- *R_{r,t}*: being the turning radius of the set of wheels 42 of the trailer 14.

Purely by way of example, the above distances may be known (for instance furnished by the supplier of the tractor 12 and the trailer 14) and the steering angle *δ* may be determined using a steering angle sensor (not shown). Using the above distances I_{f}, Iᵣ, I_{c}, I_{f,t} and I_{r,t} as well as a value indicative of the steering angle *δ*, the above-mentioned turning radii as well as the previously mentioned articulation angle Ψ can be determined in accordance with the following set of equations: ${R}_{f} = \frac{\left({l}_{f}+{l}_{r}\right)}{sin \left|δ\right|}$ Eq. 13 ${R}_{r} = \frac{\left({l}_{f}+{l}_{r}\right)}{tan \left|δ\right|}$ Eq. 14 ${R}_{f , t} = \sqrt{{R}_{r}^{2} + {\left({l}_{r}-{l}_{c}\right)}^{2}}$ Eq. 15 ${R}_{r , t} = \sqrt{{R}_{f , t}^{2} - {\left({l}_{f , t}+{l}_{r , t}\right)}^{2}}$ Eq. 16 ${R}_{CoG} = \sqrt{{R}_{r}^{2} + {l}_{r}^{2}}$ Eq. 17 ${R}_{CoG , t} = \sqrt{{R}_{r , t}^{2} + {l}_{r , t}^{2}}$ Eq. 18 $u = {tan}^{- 1} \left(\frac{{R}_{r , t}}{{l}_{f , t} + {l}_{r , t}}\right)$ Eq. 19 $w = {tan}^{- 1} \left(\frac{{R}_{r}}{{l}_{r} - {l}_{c}}\right)$ Eq. 20 $ψ = - sign \left(δ\right) \left(w-u\right)$ Eq. 21

When the tractor 12 has a certain speed *v_{LTR},* in the tractor longitudinal direction L_{TR}, the trailer 14 has a certain speed *v_{LTL}*, in the trailer longitudinal direction L_{TL}, the previously mentioned longitudinal trailer retardation value *r_{LTL}* indicative of a longitudinal trailer retardation being or predicted to be imparted on the trailer 14 has been obtained and the trailer 14 is travelling on a slope with an inclination angle *ϕ*, the tractor longitudinal force threshold value, ${F}_{{L}_{TR}}^{ret , threshold}$ can be determined in accordance with the following of the Fig. 5 embodiment: ${F}_{{L}_{TR}}^{requested} = \left({m}^{tractor}+{m}^{trailer}\right) ⋅ {r}_{{L}_{TL}} + {F}_{{L}_{TR}}^{resistance}$ Eq. 22 ${F}_{{T}_{TR}}^{tractor , centrifugal} = {m}^{tractor} \frac{{v}_{{L}_{TR}}^{2}}{{R}_{CoG}}$ Eq. 23 ${F}_{{T}_{TL}}^{trailer , centrifugal} = {m}^{trailer} \frac{{v}_{{L}_{TL}}^{2}}{{R}_{CoG , t}}$ Eq. 24 ${F}_{{L}_{TL}}^{trailer , inertial} = {m}^{trailer} ⋅ {r}_{{L}_{TL}}$ Eq. 25 ${F}_{{L}_{TL}}^{trailer , gravity} = {m}^{trailer} ⋅ g ⋅ sin \left(θ\right)$ Eq. 26 ${F}_{{T}_{TR}}^{tractor , centrifugal , front} = {F}_{{T}_{TR}}^{tractor , centrifugal} \frac{{l}_{r}}{{l}_{r} + {l}_{f}}$ Eq. 27 ${F}_{{T}_{TR}}^{tractor , centrifugal , rear} = {F}_{{T}_{TR}}^{tractor , centrifugal} \frac{{l}_{f}}{{l}_{r} + {l}_{f}}$ Eq. 28 ${F}_{{T}_{TL}}^{trailer , centrifugal , cp} = {F}_{{T}_{TL}}^{trailer , centrifugal} \frac{{l}_{r , t}}{{l}_{f , t} + {l}_{r , t}}$ Eq. 29 ${F}_{{T}_{TR}}^{trailer 2 tractor , total} = {F}_{{T}_{TL}}^{trailer , centrifugal , cp} cos ψ + \left({F}_{{L}_{TL}}^{trailer , inertial}+{F}_{{L}_{TL}}^{trailer , gravity}\right) sin ψ$ Eq. 30 ${F}_{{T}_{TR}}^{trailer 2 tractor , total , front} = {F}_{{T}_{TR}}^{trailer 2 tractor , total} \frac{{l}_{r} - {l}_{c}}{{l}_{f} + {l}_{r}}$ Eq. 31 ${F}_{{T}_{TR}}^{trailer 2 tractor , total , rear} = {F}_{{T}_{TR}}^{trailer 2 tractor , total} \frac{{l}_{f} + {l}_{c}}{{l}_{f} + {l}_{r}}$ Eq. 32 ${F}_{{T}_{TR}}^{tractor , total , front} = {F}_{{T}_{TR}}^{tractor , centrifugal , front} + {F}_{{T}_{TR}}^{trailer 2 tractor , total , front}$ Eq. 33 ${F}_{{T}_{TR}}^{tractor , total , rear} = {F}_{{T}_{TR}}^{tractor , centrifugal , rear} + {F}_{{T}_{TR}}^{trailer 2 tractor , total , rear}$ Eq. 34 ${F}_{{L}_{TR}}^{ret , threshold} = \sqrt{{\left({μF}_{z}\right)}^{2} - {\left({F}_{{T}_{TR}}^{tractor , total , front}+{F}_{{T}_{TR}}^{tractor , total , rear}\right)}^{2}}$ Eq. 35

In the above equations, the superscript "front" indicates forces associated with the front set of wheels 38, the superscript "rear" indicates forces associated with the rear set of wheels 40 of the tractor 12 and the superscript "cp" indicates forces associated with the connection point 28.

It should be noted that Eq. 35 hereinabove could alternatively be reformulated to a sum of the thresholds over the front and rear set of wheels in accordance with the following: ${F}_{{L}_{TR}}^{ret , threshold} = \sqrt{{\left({μF}_{z}^{front}\right)}^{2} - {\left({F}_{{T}_{TR}}^{tractor , total , front}\right)}^{2}} + \sqrt{{\left({μF}_{z}^{rear}\right)}^{2} - {\left({F}_{{T}_{TR}}^{tractor , total , rear}\right)}^{2}}$ Eq. 36

The above equations and Fig. 5 are related to a vehicle combination 10 comprising a tractor 12 having two set of wheels 38, 40 and a trailer 14 having one set of wheels 42. However, the above equations Eq. 13 to Eq. 35 can of course be expanded to any number of set of wheels of each one of the tractor 12 and the trailer 14.

Although the present invention has been presented in relation to methods, it should be noted that the above disclosure is equally applicable to each one of the following:
- a computer program comprising program code means for performing the method of the first or second aspects of the invention when the program is run on a computer;
- a computer readable medium carrying a computer program comprising program code means for performing the method of the first or second aspects of the invention when the program product is run on a computer;
- a control unit 30 configured to perform the method according to the first or second aspects of the invention;
- a vehicle combination comprising a tractor 12, a trailer 14 and a control unit 30 according to the above.

It is to be understood that the present invention is not limited to the embodiments described above and illustrated in the drawings; rather, the skilled person will recognize that many changes and modifications may be made within the scope of the appended claims.

## Claims

1. A method for determining a tractor longitudinal force threshold value ( ${F}_{{L}_{TR}}^{ret , threshold}$) for a tractor longitudinal retardation force ( ${F}_{{L}_{TR}}^{ret}$) that can be imparted on a tractor (12) of a vehicle combination (10) comprising said tractor (12) and a trailer (14) for retarding said vehicle combination (10),
said trailer (14) having a trailer longitudinal extension in a trailer longitudinal direction (L_{TL}), a trailer lateral extension in a trailer lateral direction (T_{TL}) and a trailer vertical extension in a trailer vertical direction (V_{TL}), wherein said trailer longitudinal direction (L_{TL}) corresponds to an intended direction of travel of said trailer (14) when said vehicle combination (10) is travelling straight ahead, said trailer vertical direction (V_{TL}) corresponds to a direction of a normal to a planar surface supporting the trailer (14) and said trailer lateral direction (T_{TL}) being perpendicular to each one of said trailer longitudinal direction (L_{TL})and said trailer vertical direction (V_{TL}),
said tractor (12) having a tractor longitudinal extension in a tractor longitudinal direction (L_{TR}), a tractor lateral extension in a tractor lateral direction (T_{TR}) and a tractor vertical extension in a tractor vertical direction (V_{TR}), wherein said tractor longitudinal direction (L_{TR}) corresponds to an intended direction of travel of said tractor (12) when said vehicle combination (10) is travelling straight ahead, said tractor vertical direction (V_{TR}) corresponds to a direction of a normal to a planar surface supporting the tractor (12) and said tractor lateral direction (T_{TR}) being perpendicular to each one of said tractor longitudinal direction (L_{TR}) and said tractor vertical direction (V_{TR}), wherein said tractor longitudinal retardation force ( ${F}_{{L}_{TR}}^{ret}$) extends in a direction parallel to said tractor longitudinal direction (T_{TR}),
said method comprising:
- determining a trailer lateral force value ( ${F}_{{T}_{TR}}^{trailer 2 tractor}$), indicative of a trailer lateral force being or predicted to be imparted on said tractor (12) in said tractor lateral direction, using a trailer lateral force value determination procedure comprising:
- obtaining a trailer mass value (*m^{trailer}*) indicative of the current mass of said trailer (14);
- obtaining a longitudinal trailer inclination angle value (*ϕ*) indicative of the inclination angle, in said trailer longitudinal direction, of the ground supporting said trailer (14);
- determining a longitudinal gravity force value ( ${F}_{{L}_{TL}}^{trailer , gravity}$) indicative of a longitudinal gravity force, in said trailer longitudinal direction (L_{TL}), imparted on said trailer (14) on the basis of at least said trailer mass value (*m^{trailer}*) and said longitudinal trailer inclination angle value (*ϕ*);
- determining an articulation angle value (*Ψ*) indicative of a current articulation angle between said tractor longitudinal direction (L_{TR}) and said trailer longitudinal direction (L_{TL}), and
- determining said trailer lateral force value ( ${F}_{{T}_{TR}}^{trailer 2 tractor}$) using said longitudinal gravity force value ( ${F}_{{L}_{TL}}^{trailer , gravity}$) and said articulation angle value (*ϕ*);
- determining a horizontal friction force value ( ${F}_{total}^{tractor}$) indicative of a possible total horizontal frictional force obtainable between said ground supporting said tractor (12) and ground engaging members of said tractor (12), and
- determining said tractor longitudinal force threshold value ( ${F}_{{L}_{TR}}^{ret , threshold}$) using said trailer lateral force value ( ${F}_{{T}_{TR}}^{trailer 2 tractor}$) and said horizontal friction force value ( ${F}_{total}^{tractor}$).

2. The method according to claim 1, wherein said trailer lateral force value determination procedure further comprises:
- obtaining a longitudinal trailer retardation value indicative of a longitudinal trailer retardation being or predicted to be imparted on said trailer;
- determining a longitudinal inertial trailer force value indicative of a longitudinal inertial force, in said trailer lateral direction, imparted on said trailer on the basis of at least said trailer mass value and said longitudinal trailer retardation value, and
- determining said tractor longitudinal force threshold value ( ${F}_{{L}_{TR}}^{ret , threshold}$) using also said longitudinal inertial trailer force value.

3. The method according to any one of the preceding claims, wherein said trailer lateral force value determination procedure further comprises:
- determining a lateral centrifugal force value indicative of a centrifugal force, in said trailer lateral direction, imparted on said trailer on the basis of at least said trailer mass value, and
determining said trailer lateral force value using also said lateral centrifugal force value, and/or
- obtaining a lateral inclination angle value indicative of the inclination angle, in said trailer lateral direction, of the ground supporting said trailer;
- determining a lateral gravity force value indicative of a lateral gravity force, in said trailer lateral direction, imparted on said trailer on the basis of at least said trailer mass value and said lateral inclination angle value, and
- determining said trailer lateral force value using also said lateral gravity force value.

4. The method according to any one of the preceding claims, wherein said trailer lateral force value determination procedure further comprises:
- multiplying each force value indicative of a force, in said trailer longitudinal direction, with the sine of said articulation angle value, or
- multiplying each force value indicative of a force, in said trailer lateral direction, with the cosine of said articulation angle value.

5. The method according to any one of the preceding claims, wherein said tractor comprises an inclination sensor, adapted to determine a longitudinal tractor inclination angle value indicative of the inclination angle, in said tractor longitudinal direction, of the ground supporting said tractor; wherein obtaining said longitudinal trailer inclination angle value indicative of the inclination angle, in said trailer longitudinal direction, of the ground supporting said trailer comprises:
- obtaining a speed value indicative of a current speed of said tractor in said a tractor longitudinal direction;
- obtaining a distance value indicative of a distance, in said a tractor longitudinal direction, between said inclination sensor and a reference point of said trailer;
- using said speed value and said distance value for determining an elapsed time from a first time instant at which said inclination sensor is located at a certain global position and a second time instant at which said reference point of said trailer is located at the same global position, and
- determining said longitudinal trailer inclination angle value using one or more longitudinal tractor inclination angle values determined by said inclination sensor as well as said elapsed time.

6. The method according to any one of the preceding claims, wherein said tractor (12) comprises a set of ground engaging member axles, wherein said set of ground engaging member axles comprises at least one axle and wherein each ground engaging member axle is connected to individual ground engaging members of said tractor (12), wherein said method comprises performing the following for each ground engaging member axle in said set of ground engaging member axles:
- on the basis of said trailer lateral force value ( ${F}_{{T}_{TR}}^{trailer 2 tractor}$), determining a trailer axle lateral force value ( ${F}_{{T}_{TR}}^{trailer 2 tractor , axle}$) indicative of a trailer lateral force being or predicted to be imparted on said ground engaging member axle;
- determining a horizontal friction force value ( ${F}_{total}^{tractor , axle}$) indicative of a possible total horizontal frictional force obtainable between said ground supporting said tractor (12) and said individual ground engaging members of said ground engaging member axle, and
- determining an axle tractor longitudinal force threshold value ( ${F}_{{L}_{TR}}^{ret , threshold , axle}$) using said trailer axle lateral force value ( ${F}_{{T}_{TR}}^{trailer 2 tractor , axle}$) and said horizontal friction force value ( ${F}_{total}^{tractor , axle}$), and
summarizing the axle tractor longitudinal force threshold value ( ${F}_{{L}_{TR}}^{ret , threshold , axle}$) for each ground engaging member axle in said set of ground engaging member axles in order to obtain said tractor longitudinal force threshold value ( ${F}_{{L}_{TR}}^{ret , threshold}$),
wherein preferably the step of determining a trailer axle lateral force value ( ${F}_{{T}_{TR}}^{trailer 2 tractor , axle}$) indicative of a trailer lateral force being or predicted to be imparted on said ground engaging member axle on the on the basis of said trailer lateral force value ( ${F}_{{T}_{TR}}^{trailer 2 tractor}$) comprises using a moment equilibrium equation using the following inputs:
- said trailer lateral force value ( ${F}_{{T}_{TR}}^{trailer 2 tractor}$);
- a distance (l_{f}, lᵣ), in the tractor longitudinal direction (L_{TR}), from each ground engaging member axle to the centre of gravity of said tractor (12), and
- a distance (l_{c}), in the tractor longitudinal direction (L_{TR}), from the connection point (28) to the centre of gravity of the tractor (12).

7. The method according to any one of the preceding claims, wherein said method comprises performing the following for each ground engaging member of said tractor (12):
- on the basis of said trailer lateral force value ( ${F}_{{T}_{TR}}^{trailer 2 tractor}$), determining a trailer ground engaging member lateral force value ( ${F}_{{T}_{TR}}^{trailer 2 tractor , gem}$) indicative of a trailer lateral force being or predicted to be imparted on said ground engaging member;
- determining a horizontal friction force value ( ${F}_{total}^{tractor , gem}$) indicative of a possible total horizontal frictional force obtainable between said ground supporting said tractor (12) and said ground engaging member, and
- determining a ground engaging member tractor longitudinal force threshold value ( ${F}_{{L}_{TR}}^{ret , threshold , gem}$) using said trailer ground engaging member lateral force value ( ${F}_{{T}_{TR}}^{trailer 2 tractor , gem}$) and said horizontal friction force value ( ${F}_{total}^{tractor , gem}$), and
summarizing the ground engaging member tractor longitudinal force threshold value ( ${F}_{{L}_{TR}}^{ret , threshold , gem}$) for each ground engaging member of said tractor (12) in order to obtain said tractor longitudinal force threshold value ( ${F}_{{L}_{TR}}^{ret , threshold}$),
wherein preferably the step of determining a determining a trailer ground engaging member lateral force value ( ${F}_{{T}_{TR}}^{trailer 2 tractor , gem}$) indicative of a trailer lateral force being or predicted to be imparted on said ground engaging member on the basis of said trailer lateral force value ( ${F}_{{T}_{TR}}^{trailer 2 tractor}$) comprises using a moment equilibrium equation using the following inputs:
- said trailer lateral force value ( ${F}_{{T}_{TR}}^{trailer 2 tractor}$);
- a distance (l_{f}, lᵣ), in the tractor longitudinal direction (L_{TR}), from each ground engaging member to the centre of gravity of said tractor (12), and
- a distance (l_{c}), in the tractor longitudinal direction (L_{TR}), from the connection point (28) to the centre of gravity of the tractor (12).

8. A method for braking a vehicle combination (10) comprising a tractor (12) and a trailer (14), said tractor (12) comprising a tractor brake assembly (16, 22, 24) for regenerative braking of said tractor (12) and said trailer (14) comprising a trailer brake assembly (26) for braking said trailer (14), said method comprising:
- determining a tractor longitudinal force threshold value ( ${F}_{{L}_{TR}}^{ret , threshold}$) using the method according to any one of the preceding claims:
- operating said tractor brake assembly (16, 22, 24) so as to provide a braking force being smaller than or equal to said tractor longitudinal force threshold value.

9. The method according to claim 8, wherein said method further comprises:
- obtaining a retardation request value (*r_{req}*) indicative of a requested retardation of said vehicle combination (10);
- determining a requested braking force (*F^{ret,request}*) to be imparted on said vehicle combination on the basis of said retardation request value (*r_{req}*);
- in response to said requested braking force (*F^{ret,request}*) being smaller than or equal to said tractor longitudinal force threshold value ( ${F}_{{L}_{TR}}^{ret , threshold}$), operating said tractor brake assembly (16, 22, 24) but not said trailer brake assembly (26) for braking said vehicle combination, preferably wherein determining a requested braking force to be imparted on said vehicle combination (10) on the basis of said retardation request value further comprises obtaining a tractor mass value (*m^{tractor}*) indicative of the current mass of said tractor (12) and a trailer mass value (*m^{trailer}*) indicative of the current mass of said trailer (14).

10. The method according to claim 9, wherein determining a requested braking force to be imparted on said vehicle combination (10) on the basis of said retardation request value (*r_{req}*) further comprises determining a longitudinal trailer inclination angle value (*ϕ*) indicative of the inclination angle, in said trailer longitudinal direction, of the ground supporting said trailer.

11. The method according to any one of claims 9 to 10, wherein determining a requested braking force to be imparted on said vehicle combination (10) on the basis of said retardation request value (*r_{req}*) further comprises determining a longitudinal tractor inclination angle value indicative of the inclination angle, in said tractor longitudinal direction, of the ground supporting said tractor.

12. A computer program comprising program code means for performing the method of any one of the preceding claims when said program is run on a computer.

13. A computer readable medium carrying a computer program comprising program code means for performing the method of any of claims 1 - 11 when said program is run on a computer.

14. A control unit (30) configured to perform the method according to any of claims 1 - 11.

15. A vehicle combination (10) comprising a tractor (12), a trailer (14) and a control unit (30) according to claim 14.

## Patentansprüche

1. Verfahren zum Bestimmen eines Zugmaschinenlängskraftschwellenwerts ( ${F}_{{L}_{TR}}^{ret , Schwellenwert}$) für eine Zugmaschinenlängsverlangsamungskraft ( ${F}_{{L}_{TR}}^{ret}$), die auf eine Zugmaschine (12) einer Fahrzeugkombination (10) ausgeübt werden kann, umfassend die Zugmaschine (12) und einen Anhänger (14), zum Verlangsamen der Fahrzeugkombination (10),
wobei der Anhänger (14) eine Anhängerlängserstreckung in einer Anhängerlängsrichtung (L_{TL}), eine Anhängerquererstreckung in einer Anhängerquerrichtung (T_{TL}) und eine Anhängervertikalerstreckung in einer Anhängervertikalrichtung (V_{TL}) aufweist, wobei die Anhängerlängsrichtung (L_{TL}) einer beabsichtigten Fahrtrichtung des Anhängers (14) entspricht, wenn die Fahrzeugkombination (10) geradeaus fährt, die Anhängervertikalrichtung (V_{TL}) einer Richtung einer Normalen zu einer planaren Oberfläche entspricht, die den Anhänger (14) trägt, und die Anhängerquerrichtung (T_{TL}) senkrecht zu jeder der Anhängerlängsrichtung (L_{TL}) und der Anhängervertikalrichtung (V_{TL}) ist,
wobei die Zugmaschine (12) eine Zugmaschinenlängserstreckung in einer Zugmaschinenlängsrichtung (L_{TR}), eine Zugmaschinenquererstreckung in einer Zugmaschinenquerrichtung (T_{TR}) und eine Zugmaschinenvertikalerstreckung in einer Zugmaschinenvertikalrichtung (V_{TR}) aufweist, wobei die Zugmaschinenlängsrichtung (L_{TR}) einer beabsichtigten Fahrtrichtung der Zugmaschine (12) entspricht, wenn die Fahrzeugkombination (10) geradeaus fährt, die Zugmaschinenvertikalrichtung (V_{TR}) einer Richtung einer Normalen zu einer planaren Oberfläche entspricht, die die Zugmaschine (12) trägt, und die Zugmaschinenquerrichtung (T_{TR}) senkrecht zu jeder der Zugmaschinenlängsrichtungen (L_{TR}) und der Zugmaschinenvertikalrichtung (V_{TR}) ist, wobei die Zugmaschinenlängsverzögerungskraft( ${F}_{{L}_{TR}}^{ret}$) sich in einer Richtung parallel zu der Zugmaschinenlängsrichtung (T_{TR}) erstreckt,
das Verfahren umfassend:
- Bestimmen eines Anhängerquerkraftwerts ( ${F}_{{T}_{TR}}^{Anh ä nger 2 Zugmaschine}$), der eine Anhängerquerkraft angibt, die auf die Zugmaschine (12) in der Zugmaschinenquerrichtung ausgeübt oder für diese vorhergesagt wird, unter Verwendung eines Anhängerquerkraftwertbestimmungsvorgangs, umfassend:
- Erhalten eines Anhängermassenwerts (*m^{Anhänger}*), der die aktuelle Masse des Anhängers (14) angibt;
- Erhalten eines Anhängerlängsneigungswinkelwerts (*ϕ*), der den Neigungswinkel in der Anhängerlängsrichtung des Bodens, der den Anhänger (14) trägt, angibt;
- Bestimmen eines Längsgravitationskraftwerts ( ${F}_{{L}_{TR}}^{Anh ä nger , Schwerkraft}$), der eine Längsgravitationskraft in der Anhängerlängsrichtung (L_{TL}) angibt, die auf den Anhänger (14) ausgeübt wird, auf der Basis von mindestens dem Anhängermassenwert (*m^{Anhänger}*) und dem Anhängerlängsneigungswinkelwerts (*ϕ*), und
- Bestimmen eines Knickwinkelwerts (*Ψ*), der einen aktuellen Knickwinkel zwischen der Zugmaschinenlängsrichtung (L_{TR}) und der Anhängerlängsrichtung (L_{TR}) angibt, und
- Bestimmen des Anhängerquerkraftwerts ( ${F}_{{T}_{TR}}^{Anh ä nger 2 Zugmaschine}$) unter Verwendung des Längsgravitationskraftwerts ( ${F}_{{L}_{TR}}^{Anh ä nger , Schwerkraft}$) und des Knickwinkelwerts (*ϕ*);
- Bestimmen eines Horizontalreibungskraftwerts ( ${F}_{gesamt}^{Zugmaschine}$), der eine mögliche Gesamthorizontalreibungskraft angibt, die zwischen dem Boden, der die Zugmaschine (12) trägt, und Bodeneingriffselementen der Zugmaschine (12) erhältlich ist, und
- Bestimmen des Zugmaschinenlängskraftschwellenwerts ( ${F}_{{L}_{TR}}^{ret , Schwellenwert}$) unter Verwendung des Anhängerquerkraftwerts ( ${F}_{{T}_{TR}}^{Anh ä nger 2 Zugmaschine}$) und des Horizontalreibungskraftwerts ( ${F}_{gesamt}^{Zugmaschine}$).

2. Verfahren nach Anspruch 1, wobei der Anhängerquerkraftwertbestimmungsvorgang ferner umfasst:
- Erhalten eines Anhängerlängsverlangsamungswerts, der eine Anhängerlängsverlangsamung angibt, die auf den Anhänger ausgeübt oder für diesen vorhergesagt wird;
- Bestimmen eines Anhängerlängsträgheitskraftwerts, der eine Längsträgheitskraft in der Anhängerquerrichtung angibt, die auf den Anhänger ausgeübt wird, auf der Basis von mindestens dem Anhängermassenwert und dem Anhängerlängsverlangsamungswert, und
- Bestimmen des Zugmaschinenlängskraftschwellenwerts ( ${F}_{{L}_{TR}}^{ret , Schwellenwert}$) auch unter Verwendung des Anhängerlängsträgheitskraftwerts.

3. Verfahren nach einem der vorstehenden Ansprüche, wobei der Anhängerquerkraftwertbestimmungsvorgang ferner umfasst:
- Bestimmen eines Querzentrifugalkraftwerts, der eine Zentrifugalkraft in der Anhängerquerrichtung angibt, die auf den Anhänger ausgeübt wird, auf der Basis von mindestens dem Anhängermassenwert, und
Bestimmen des Anhängerquerkraftwerts auch unter Verwendung des Querzentrifugalkraftwerts, und/oder
- Erhalten eines Querneigungswinkelwerts, der den Neigungswinkel in der Anhängerquerrichtung des Bodens angibt, der den Anhänger trägt;
- Bestimmen eines Quergravitationskraftwerts, der eine Quergravitationskraft in der Anhängerquerrichtung angibt, die auf den Anhänger ausgeübt wird, auf der Basis von mindestens dem Anhängermassenwert und dem Querneigungswinkelwert, und
- Bestimmen des Anhängerquerkraftwerts auch unter Verwendung des Quergravitationskraftwerts.

4. Verfahren nach einem der vorstehenden Ansprüche, wobei der Anhängerquerkraftwertbestimmungsvorgang ferner umfasst:
- Multiplizieren jedes Kraftwerts, der eine Kraft in der Anhängerlängsrichtung angibt, mit dem Sinus des Knickwinkelwerts, oder
- Multiplizieren jedes Kraftwerts, der eine Kraft in der Anhängerquerrichtung angibt, mit dem Kosinus des Knickwinkelwerts.

5. Verfahren nach einem der vorhergehenden Ansprüche, wobei die Zugmaschine einen Neigungssensor umfasst, der angepasst ist, um einen Zugmaschinenlängsneigungswinkelwert zu bestimmen, der den Neigungswinkel in die Zugmaschinenlängsrichtung des die Zugmaschine tragenden Bodens angibt; wobei das Erhalten des Anhängerlängsneigungswinkelwerts, der den Neigungswinkel in der Anhängerlängsrichtung des Bodens, der den Anhänger trägt, angibt, umfasst:
- Erhalten eines Geschwindigkeitswerts, der eine aktuelle Geschwindigkeit der Zugmaschine in der Zugmaschinenlängsrichtung angibt;
- Erhalten eines Abstandswerts, der einen Abstand in der Zugmaschinelängsrichtung zwischen dem Neigungssensor und einem Referenzpunkt des Anhängers angibt;
- Verwenden des Geschwindigkeitswerts und des Abstandswerts zum Bestimmen einer verstrichenen Zeit zwischen einem ersten Zeitpunkt, zu dem sich der Neigungssensor an einer bestimmten globalen Position befindet, und einem zweiten Zeitpunkt, zu dem sich der Referenzpunkt des Anhängers an derselben globalen Position befindet, und
- Bestimmen des Anhängerlängsneigungswinkelwerts unter Verwendung eines oder mehrerer Zugmaschinenlängsneigungswinkelwerte, die durch den Neigungssensor bestimmt werden, sowie der verstrichenen Zeit.

6. Verfahren nach einem der vorstehenden Ansprüche, wobei die Zugmaschine (12) einen Satz von Bodeneingriffselementachsen umfasst, wobei der Satz von Bodeneingriffselementachsen mindestens eine Achse umfasst und wobei jede Bodeneingriffselementachse mit einzelnen Bodeneingriffselementen der Zugmaschine (12) verbunden ist, wobei das Verfahren das Durchführen des Folgenden für jede Bodeneingriffselementachse in dem Satz von Bodeneingriffselementachsen umfasst:
- auf der Basis des Anhängerquerkraftwerts ( ${F}_{{T}_{TR}}^{Anh ä nger 2 Zugmaschine}$), Bestimmen eines Anhängerachsenquerkraftwerts ( ${F}_{{T}_{TR}}^{Anh ä nger 2 Zugmaschine , Achse}$), der eine Anhängerquerkraft angibt, die auf die Bodeneingriffselementachse ausgeübt oder für diese vorhergesagt wird;
- Bestimmen eines Horizontalreibungskraftwerts ( ${F}_{gesamt}^{Zugmaschine , Achse}$), der eine mögliche Gesamthorizontalreibungskraft angibt, die zwischen dem Boden, der die Zugmaschine (12) trägt, und den einzelnen Bodeneingriffselementen der Bodeneingriffselementachse erhältlich ist, und
- Bestimmen eines Zugmaschinenachsenlängskraftschwellenwerts ( ${F}_{{L}_{TR}}^{ret , Schwellenwert , Achse}$) unter Verwendung des Anhängerquerkraftwerts ( ${F}_{{T}_{TR}}^{Anh ä nger 2 Zugmaschine , Achse}$) und des Horizontalreibungskraftwerts ( ${F}_{gesamt}^{Zugmaschine , Achse}$), und
Summieren des Zugmaschinenachsenlängskraftschwellenwerts ( ${F}_{{L}_{TR}}^{ret , Schwellenwert , Achse}$) für jede Bodeneingriffselementachse in dem Satz von Bodeneingriffselementachsen, um den Zugmaschinenlängskraftschwellenwert ( ${F}_{{L}_{TR}}^{ret , Schwellenwert}$) zu erhalten
wobei vorzugsweise der Schritt des Bestimmens eines Anhängerachsenquerkraftwerts ( ${F}_{{T}_{TR}}^{Anh ä nger 2 Zugmaschine , Achse}$), der eine Anhängerquerkraft angibt, die auf die Bodeneingriffselementachse ausgeübt oder für diese vorhergesagt wird, auf der Basis des Anhängerquerkraftwerts ( ${F}_{{T}_{TR}}^{Anh ä nger 2 Zugmaschine}$), das Verwenden einer Momentgleichgewichtsgleichung unter Verwendung der folgenden Eingaben umfasst:
- des Anhängerquerkraftwerts ( ${F}_{{T}_{TR}}^{Anh ä nger 2 Zugmaschine}$);
- einer Distanz (l_{f}, lᵣ), in der Zugmaschinenlängsrichtung (L_{TR}), von jeder Bodeneingriffselementachse zu dem Schwerpunkt der Zugmaschine (12), und
- einer Distanz (l_{c}), in der Zugmaschinenlängsrichtung (L_{TR}), von dem Verbindungspunkt (28) zu dem Schwerpunkt der Zugmaschine (12).

7. Verfahren nach einem der vorhergehenden Ansprüche, wobei das Verfahren das Durchführen von Folgendem für jedes Bodeneingriffselement der Zugmaschine (12) umfasst:
- auf der Basis des Anhängerquerkraftwerts ( ${F}_{{T}_{TR}}^{Anh ä nger 2 Zugmaschine}$), Bestimmen eines Anhängerbodeneingriffselementquerkraftwerts ( ${F}_{{T}_{TR}}^{Anh ä nger 2 Zugmaschine , gem}$), der eine Anhängerquerkraft angibt, die auf das Bodeneingriffselement ausgeübt oder für dieses vorhergesagt wird;
- Bestimmen eines Horizontalreibungskraftwerts ( ${F}_{gesamt}^{Zugmaschine , gem}$), der eine mögliche Gesamthorizontalreibungskraft angibt, die zwischen dem Boden, der die Zugmaschine (12) trägt, und dem Satz von Bodeneingriffselementen erhältlich ist, und
- Bestimmen eines Zugmaschinenbodeneingriffselementlängskraftschwellenwerts ( ${F}_{{L}_{TR}}^{ret , Schwellenwert , gem}$) unter Verwendung des Anhängerbodeneingriffselementquerkraftwerts ( ${F}_{{T}_{TR}}^{Anh ä nger 2 Zugmaschine , gem}$) und des Horizontalreibungskraftwerts ( ${F}_{gesamt}^{Zugmaschine , gem}$) und
Summieren des Zugmaschinenbodeneingriffselementlängskraftschwellenwerts ( ${F}_{{L}_{TR}}^{ret , Schwellenwert , gem}$) für jedes Bodeneingriffselement der Zugmaschine (12), um den Zugmaschinenlängskraftschwellenwert ( ${F}_{{L}_{TR}}^{ret , Schwellenwert}$) zu erhalten
wobei vorzugsweise der Schritt des Bestimmens eines Bestimmens des Anhängerbodeneingriffselementquerkraftwerts ( ${F}_{{T}_{TR}}^{Anh ä nger 2 Zugmaschine , gem}$), der eine Anhängerquerkraft angibt, die auf das Bodeneingriffselement ausgeübt oder für dieses vorhergesagt wird, auf der Basis des Anhängerquerkraftwerts ( ${F}_{{T}_{TR}}^{Anh ä nger 2 Zugmaschine}$) das Verwenden einer Momentgleichgewichtsgleichung unter Verwendung der folgenden Eingaben umfasst:
- des Anhängerquerkraftwerts ( ${F}_{{T}_{TR}}^{Anh ä nger 2 Zugmaschine}$)
- einer Distanz (l_{f}, lᵣ), in der Zugmaschinelängsrichtung (L_{TR}), von jedem Bodeneingriffselement zu dem Schwerpunkt der Zugmaschine (12), und
- einer Distanz (l_{c}), in der Zugmaschinenlängsrichtung (L_{TR}), von dem Verbindungspunkt (28) zu dem Schwerpunkt der Zugmaschine (12).

8. Verfahren zum Bremsen einer Fahrzeugkombination (10), umfassend eine Zugmaschine (12) und einen Anhänger (14), wobei die Zugmaschine (12) eine Zugmaschinenbremsbaugruppe (16, 22, 24) für regeneratives Bremsen der Zugmaschine (12) umfasst, und der Anhänger (14) eine Anhängerbremsbaugruppe (26) zum Bremsen des Anhängers (14) umfasst, wobei das Verfahren umfasst:
- Bestimmen eines Zugmaschinenlängskraftschwellenwerts ( ${F}_{{L}_{TR}}^{ret , Schwellenwert}$) unter Verwendung des Verfahrens nach einem der vorstehenden Ansprüche:
- Betreiben der Zugmaschinenbremsbaugruppe (16, 22, 24), um eine Bremskraft bereitzustellen, die kleiner als oder gleich dem Zugmaschinenlängskraftschwellenwert ist.

9. Verfahren nach Anspruch 8, wobei das Verfahren ferner Folgendes umfasst:
- Erhalten eines Verlangsamungsanforderungswerts *(r_{req})*, der eine angeforderte Verlangsamung der Fahrzeugkombination (10) angibt;
- Bestimmen einer angeforderten Bremskraft (*F^{ret,request}*), die auf die Fahrzeugkombination ausgeübt werden soll, auf der Basis des Verlangsamungsanforderungswerts *(r_{req});*
- als Reaktion darauf, dass die angeforderte Bremskraft (*F^{ret,request}*) kleiner als oder gleich dem Zugmaschinenlängskraftschwellenwert ( ${F}_{{L}_{TR}}^{ret , Schwellenwert}$) ist, Betreiben der Zugmaschinenbremsanordnung (16, 22, 24), aber nicht der Anhängerbremsanordnung (26), zum Bremsen der Fahrzeugkombination, wobei vorzugsweise das Bestimmen einer angeforderten Bremskraft, die auf die Fahrzeugkombination (10) ausgeübt werden soll, auf Basis des Verzögerungsanforderungswerts, ferner das Erhalten eines Zugmaschinenmassenwerts (*m^{Zugmaschine}*), der die aktuelle Masse der Zugmaschine (12) angibt, und eines Anhängermassenwerts (*m^{Anhänger}*), der die aktuelle Masse des Anhängers (14) angibt, umfasst.

10. Verfahren nach Anspruch 9, wobei das Bestimmen einer angeforderten Bremskraft, die auf die Fahrzeugkombination (10) ausgeübt werden soll, auf der Basis des Verlangsamungsanforderungswerts (*r_{req}*) ferner das Bestimmen eines Anhängerlängsneigungswinkelwerts (*ϕ*), der den Neigungswinkel in der Anhängerlängsrichtung des Bodens angibt, der den Anhänger trägt, umfasst.

11. Verfahren nach einem der Ansprüche 9 bis 10, wobei das Bestimmen einer angeforderten Bremskraft, die auf die Fahrzeugkombination (10) ausgeübt werden soll, auf der Basis des Verlangsamungsanforderungswerts (*r_{req}*) ferner das Bestimmen eines Zugmaschinenlängsneigungswinkelwerts, der den Neigungswinkel in der Zugmaschinenlängsrichtung des Bodens angibt, der die Zugmaschine trägt, umfasst.

12. Computerprogramm, umfassend Programmcodemittel zum Durchführen des Verfahrens nach einem der vorstehenden Ansprüche, wenn das Programm auf einem Computer ausgeführt wird.

13. Computerlesbares Medium, das ein Computerprogramm trägt, umfassend Programmcodemittel zum Durchführen des Verfahrens nach einem der Ansprüche 1 bis 11, wenn das Programmprodukt auf einem Computer ausgeführt wird.

14. Steuereinheit (30), die konfiguriert ist, um das Verfahren nach einem der Ansprüche 1 bis 11 durchzuführen.

15. Fahrzeugkombination (10), umfassend eine Zugmaschine (12), einen Anhänger (14) und eine Steuereinheit (30) nach Anspruch 14.

## Revendications

1. Procédé destiné à déterminer une valeur seuil de force longitudinale de tracteur ( ${F}_{{L}_{TR}}^{ret , seuil}$) pour une force de retard longitudinale de tracteur ( ${F}_{{L}_{TR}}^{ret}$) qui peut être appliquée sur un tracteur (12) d'une combinaison de véhicules (10) comprenant ledit tracteur (12) et une remorque (14) pour ralentir ladite combinaison de véhicules (10),
ladite remorque (14) ayant une extension longitudinale de remorque dans une direction longitudinale de remorque (L_{TL}), une extension latérale de remorque dans une direction latérale de remorque (T_{TL}) et une extension verticale de remorque dans une direction verticale de remorque (V_{TL}), dans lequel ladite direction longitudinale de remorque (L_{TL}) correspond à une direction de déplacement prévue de ladite remorque (14) lorsque ladite combinaison de véhicules (10) se déplace tout droit, ladite direction verticale de remorque (V_{TL}) correspond à une direction d'une normale à une surface plane supportant la remorque (14) et ladite direction latérale de remorque (T_{TL}) étant perpendiculaire à chacune de ladite direction longitudinale de remorque (L_{TL}) et de ladite direction verticale de remorque (V_{TL}),
ledit tracteur (12) ayant une extension longitudinale de tracteur dans une direction longitudinale de tracteur (L_{TR}), une extension latérale de tracteur dans une direction latérale de tracteur(T_{TR}) et une extension verticale de tracteur dans une direction verticale de tracteur (V_{TR}), dans lequel ladite direction longitudinale de tracteur (L_{TR}) correspond à une direction de déplacement prévue dudit tracteur (12) lorsque ladite combinaison de véhicules (10) se déplace en ligne droite, ladite direction verticale de tracteur (V_{TR}) correspond à une direction d'une normale à une surface plane supportant le tracteur (12) et ladite direction latérale de tracteur (T_{TR}) étant perpendiculaire à chacune de ladite direction longitudinale de tracteur (L_{TR}) et de ladite direction verticale de tracteur (V_{TR}), dans lequel ladite force de retard longitudinale de tracteur ( ${F}_{{L}_{TR}}^{ret}$) s'étend dans une direction parallèle à ladite direction longitudinale de tracteur (T_{TR}),
ledit procédé comprenant :
- la détermination d'une valeur de force latérale de remorque ( ${F}_{{T}_{TR}}^{remorque 2 tracteur}$), indiquant une force latérale de remorque appliquée ou prédite sur ledit tracteur (12) dans ladite direction latérale de tracteur, à l'aide d'une procédure de détermination de valeur de force latérale de remorque comprenant :
- l'obtention d'une valeur de masse de remorque (*m^{remorque}*) indiquant la masse actuelle de ladite remorque (14) ;
- l'obtention d'une valeur d'angle d'inclinaison de remorque longitudinal (*ϕ*) indiquant l'angle d'inclinaison, dans ladite direction longitudinale de remorque, du sol supportant ladite remorque (14) ;
- la détermination d'une valeur de force de gravité longitudinale ( ${F}_{{L}_{TL}}^{remorque , gravit é}$) indiquant une force de gravité longitudinale, dans ladite direction longitudinale de remorque (L_{TL}), appliquée sur ladite remorque (14) sur la base au moins de ladite valeur de masse de remorque (*m^{remorque}*) et de ladite valeur d'angle d'inclinaison de remorque longitudinal (*ϕ*) ;
- la détermination d'une valeur d'angle d'articulation (*ψ*) indiquant un angle d'articulation actuel entre ladite direction longitudinale de tracteur (L_{TR}) et ladite direction longitudinale de remorque (L_{TL}), et
- la détermination de ladite valeur de force latérale de remorque ( ${F}_{{T}_{TR}}^{remorque 2 tracteur}$) à l'aide de ladite valeur de force de gravité longitudinale ( ${F}_{{L}_{TL}}^{remorque , gravit é}$) et de ladite valeur d'angle d'articulation (*ϕ*) ;
- la détermination d'une valeur de force de frottement horizontale ( ${F}_{total}^{tracteur}$) indiquant une éventuelle force de frottement horizontale totale qui peut être obtenue entre ledit sol supportant ledit tracteur (12) et des éléments d'entrée en prise avec le sol dudit tracteur (12), et
- la détermination de ladite valeur seuil de force longitudinale de tracteur ( ${F}_{{L}_{TR}}^{ret , seuil}$) à l'aide de ladite valeur de force latérale de remorque ( ${F}_{{T}_{TR}}^{remorque 2 tracteur}$) et de ladite valeur de force de frottement horizontale ( ${F}_{total}^{tracteur}$).

2. Procédé selon la revendication 1, dans lequel ladite procédure de détermination de valeur de force latérale de remorque comprend en outre :
- l'obtention d'une valeur de retard de remorque longitudinal indiquant un retard de remorque longitudinal appliqué ou prédit sur ladite remorque ;
- la détermination d'une valeur de force de remorque d'inertie longitudinale indiquant une force d'inertie longitudinale, dans ladite direction latérale de remorque, appliquée sur ladite remorque sur la base au moins de ladite valeur de masse de remorque et de ladite valeur de retard de remorque longitudinal, et
- la détermination de ladite valeur seuil de force longitudinale de tracteur ( ${F}_{{L}_{TR}}^{ret , seuil}$) à l'aide également de ladite valeur de force de remorque d'inertie longitudinale.

3. Procédé selon l'une quelconque des revendications précédentes, dans lequel ladite procédure de détermination de valeur de force latérale de remorque comprend en outre :
- la détermination d'une valeur de force centrifuge latérale indiquant une force centrifuge, dans ladite direction latérale de remorque, appliquée sur ladite remorque sur la base d'au moins ladite valeur de masse de remorque, et
la détermination de ladite valeur de force latérale de remorque à l'aide également de ladite valeur de force centrifuge latérale et/ou
- l'obtention d'une valeur d'angle d'inclinaison latéral indiquant l'angle d'inclinaison, dans ladite direction latérale de remorque, du sol supportant ladite remorque ;
- la détermination d'une valeur de force de gravité latérale indiquant une force de gravité latérale, dans ladite direction latérale de remorque, appliquée sur ladite remorque sur la base au moins de ladite valeur de masse de remorque et de ladite valeur d'angle d'inclinaison latéral, et
- la détermination de ladite valeur de force latérale de remorque à l'aide également de ladite valeur de force de gravité latérale.

4. Procédé selon l'une quelconque des revendications précédentes, dans lequel ladite procédure de détermination de valeur de force latérale de remorque comprend en outre :
- la multiplication de chaque valeur de force indiquant une force, dans ladite direction longitudinale de remorque, par le sinus de ladite valeur d'angle d'articulation, ou
- la multiplication de chaque valeur de force indiquant une force, dans ladite direction latérale de remorque, par le cosinus de ladite valeur d'angle d'articulation.

5. Procédé selon l'une quelconque des revendications précédentes, dans lequel ledit tracteur comprend un capteur d'inclinaison, adapté pour déterminer une valeur d'angle d'inclinaison de tracteur longitudinal indiquant l'angle d'inclinaison, dans ladite direction longitudinale de tracteur, du sol supportant ledit tracteur ; dans lequel l'obtention de ladite valeur d'angle d'inclinaison de remorque longitudinal indiquant l'angle d'inclinaison, dans ladite direction longitudinale de remorque, du sol supportant ladite remorque comprend :
- l'obtention d'une valeur de vitesse indiquant une vitesse actuelle dudit tracteur dans ladite une direction longitudinale de tracteur ;
- l'obtention d'une valeur de distance indiquant une distance, dans ladite une direction longitudinale de tracteur, entre ledit capteur d'inclinaison et un point de référence de ladite remorque ;
- l'utilisation de ladite valeur de vitesse et de ladite valeur de distance pour déterminer un temps écoulé entre un premier instant auquel ledit capteur d'inclinaison est situé au niveau d'une certaine position globale et un second instant auquel ledit point de référence de ladite remorque est situé au niveau de la même position globale, et
- la détermination de ladite valeur d'angle d'inclinaison de remorque longitudinal à l'aide d'une ou plusieurs valeurs d'angle d'inclinaison de tracteur longitudinal déterminées par ledit capteur d'inclinaison ainsi que ledit temps écoulé.

6. Procédé selon l'une quelconque des revendications précédentes, dans lequel ledit tracteur (12) comprend un ensemble d'essieux d'élément d'entrée en prise avec le sol, dans lequel ledit ensemble d'essieux d'élément d'entrée en prise avec le sol comprend au moins un essieu et dans lequel chaque essieu d'élément d'entrée en prise avec le sol est relié à des éléments d'entrée en prise avec le sol individuels dudit tracteur (12), dans lequel ledit procédé comprend la réalisation de ce qui suit pour chaque essieu d'élément d'entrée en prise avec le sol dans ledit ensemble d'essieux d'élément d'entrée en prise avec le sol :
- sur la base de ladite valeur de force latérale de remorque ( ${F}_{{T}_{TR}}^{remorque 2 tracteur}$), la détermination d'une valeur de force latérale d'essieu de remorque ( ${F}_{{T}_{TR}}^{remorque 2 tracteur , essieu}$)indiquant une force latérale de remorque appliquée ou prédite sur ledit essieu d'élément d'entrée en prise avec le sol ;
- la détermination d'une valeur de force de frottement horizontale ( ${F}_{total}^{tracteur , essieu}$) indiquant une éventuelle force de frottement horizontale totale qui peut être obtenue entre ledit sol supportant ledit tracteur (12) et lesdits éléments d'entrée en prise avec le sol individuels dudit essieu d'élément d'entrée en prise avec le sol, et
- la détermination d'une valeur seuil de force longitudinale de tracteur d'essieu ( ${F}_{{L}_{TR}}^{ret , seuil , essieu}$) à l'aide de ladite valeur de force latérale d'essieu de remorque ( ${F}_{{T}_{TR}}^{remorque 2 tracteur , essieu}$) et de ladite valeur de force de frottement horizontale ( ${F}_{total}^{tracteur , essieu}$), et
la somme de la valeur seuil de force longitudinale de tracteur d'essieu ( ${F}_{{L}_{TR}}^{ret , seuil , essieu}$) pour chaque essieu d'élément d'entrée en prise avec le sol dans ledit ensemble d'essieux d'élément d'entrée en prise avec le sol afin d'obtenir ladite valeur seuil de force longitudinale de tracteur ( ${F}_{{L}_{TR}}^{ret , seuil}$),
dans lequel de préférence l'étape de détermination d'une valeur de force latérale d'essieu de remorque ( ${F}_{{T}_{TR}}^{remorque 2 tracteur , essieu}$) indiquant une force latérale de remorque appliquée ou prédite sur ledit essieu d'élément d'entrée en prise avec le sol sur la base de ladite valeur de force latérale de remorque ( ${F}_{{T}_{TR}}^{remorque 2 tracteur}$) comprend l'utilisation d'une équation d'équilibre de moment à l'aide des entrées suivantes :
- ladite valeur de force latérale de remorque ( ${F}_{{T}_{TR}}^{remorque 2 tracteur}$);
- une distance (I_{f}, Iᵣ), dans la direction longitudinale de tracteur (L_{TR}), entre chaque essieu d'élément d'entrée en prise avec le sol et le centre de gravité dudit tracteur (12), et
- une distance (I_{c}), dans la direction longitudinale de tracteur (L_{TR}), entre le point de liaison (28) et le centre de gravité du tracteur (12).

7. Procédé selon l'une quelconque des revendications précédentes, dans lequel ledit procédé comprend la réalisation de ce qui suit pour chaque élément d'entrée en prise avec le sol dudit tracteur (12) :
- sur la base de ladite valeur de force latérale de remorque ( ${F}_{{T}_{TR}}^{remorque 2 tracteur}$), la détermination d'une valeur de force latérale d'élément d'entrée en prise avec le sol de remorque ( ${F}_{{T}_{TR}}^{remorque 2 tracteur , gem}$) indiquant une force latérale de remorque appliquée ou prédite sur ledit élément d'entrée en prise avec le sol ;
- la détermination d'une valeur de force de frottement horizontale ( ${F}_{total}^{tracteur , gem}$) indiquant une éventuelle force de frottement horizontale totale qui peut être obtenue entre ledit sol supportant ledit tracteur (12) et ledit élément d'entrée en prise avec le sol, et
- la détermination d'une valeur seuil de force longitudinale de tracteur d'élément d'entrée en contact avec le sol ( ${F}_{{L}_{TR}}^{ret , seuil , gem}$) à l'aide de ladite valeur de force latérale d'élément d'entrée en contact avec le sol de remorque ( ${F}_{{T}_{TR}}^{remorque 2 tracteur , gem}$) et ladite valeur de force de frottement horizontale ( ${F}_{total}^{tracteur , gem}$), et
la somme de la valeur seuil de force longitudinale de tracteur d'élément d'entrée en prise avec le sol ( ${F}_{{L}_{TR}}^{ret , seuil , gem}$) pour chaque élément d'entrée en prise avec le sol dudit tracteur (12) afin d'obtenir ladite valeur seuil de force longitudinale de tracteur ( ${F}_{{L}_{TR}}^{ret , seuil}$)
dans lequel de préférence l'étape de détermination d'une valeur de force latérale d'élément d'entrée en prise avec le sol de remorque ( ${F}_{{T}_{TR}}^{remorque 2 tracteur , gem}$) indiquant une force latérale de remorque appliquée ou prédite sur ledit élément d'entrée en prise avec le sol sur la base de ladite valeur de force latérale de remorque ( ${F}_{{T}_{TR}}^{remorque 2 tracteur}$) comprend l'utilisation d'une équation d'équilibre de moment à l'aide des entrées suivantes :
- ladite valeur de force latérale de remorque ( ${F}_{{T}_{TR}}^{remorque 2 tracteur}$)
- une distance (I_{f}, Iᵣ), dans la direction longitudinale de tracteur (L_{TR}), entre chaque élément d'entrée en prise avec le sol et le centre de gravité dudit tracteur (12), et
- une distance (I_{c}), dans la direction longitudinale de tracteur (L_{TR}), entre le point de liaison (28) et le centre de gravité du tracteur (12).

8. Procédé destiné à freiner une combinaison de véhicules (10) comprenant un tracteur (12) et une remorque (14), ledit tracteur (12) comprenant un ensemble frein de tracteur (16, 22, 24) pour le freinage par récupération dudit tracteur (12) et ladite remorque (14) comprenant un ensemble frein de remorque (26) pour le freinage de ladite remorque (14), ledit procédé comprenant :
- la détermination d'une valeur seuil de force longitudinale de tracteur ( ${F}_{{L}_{TR}}^{ret , seuil}$) à l'aide du procédé selon l'une quelconque des revendications précédentes :
- l'actionnement dudit ensemble frein de tracteur (16, 22, 24) de manière à fournir une force de freinage inférieure ou égale à ladite valeur seuil de force longitudinale de tracteur.

9. Procédé selon la revendication 8, dans lequel ledit procédé comprend en outre :
- l'obtention d'une valeur de demande de retard (*r_{req}*) indiquant un retard demandé de ladite combinaison de véhicules (10) ;
- la détermination d'une force de freinage demandée (*F*^{*ret*,*demande*}) à appliquer sur ladite combinaison de véhicules sur la base de ladite valeur de demande de retard (*r_{req}*) ;
- en réponse à ladite force de freinage demandée (*F^{et,demande}*) étant inférieure ou égale à ladite valeur seuil de force longitudinale de tracteur ( ${F}_{{L}_{TR}}^{ret , seuil}$), l'actionnement dudit ensemble frein de tracteur (16, 22, 24) mais pas dudit ensemble frein de remorque (26) pour freiner ladite combinaison de véhicules, de préférence dans lequel la détermination d'une force de freinage demandée à appliquer sur ladite combinaison de véhicules (10) sur la base de ladite valeur de demande de retard comprend en outre l'obtention d'une valeur de masse de tracteur (*ₘ^{tracteur}*) indiquant la masse actuelle dudit tracteur (12) et d'une valeur de masse de remorque (*m^{remorque}*) indiquant la masse actuelle de ladite remorque (14).

10. Procédé selon la revendication 9, dans lequel la détermination d'une force de freinage demandée à appliquer sur ladite combinaison de véhicules (10) sur la base de ladite valeur de demande de retard (*r_{req}*) comprend en outre la détermination d'une valeur d'angle d'inclinaison de remorque longitudinal (*ϕ*) indiquant l'angle d'inclinaison, dans ladite direction longitudinale de remorque, du sol supportant ladite remorque.

11. Procédé selon l'une quelconque des revendications 9 à 10, dans lequel la détermination d'une force de freinage demandée à appliquer sur ladite combinaison de véhicules (10) sur la base de ladite valeur de demande de retard (*r_{req}*) comprend en outre la détermination d'une valeur d'angle d'inclinaison de tracteur longitudinal indiquant l'angle d'inclinaison, dans ladite direction longitudinale de tracteur, du sol supportant ledit tracteur.

12. Programme informatique comprenant un moyen de code de programme destiné à réaliser le procédé selon l'une quelconque des revendications précédentes lorsque ledit programme est exécuté sur un ordinateur.

13. Support lisible par ordinateur transportant un programme informatique comprenant un moyen de code de programme destiné à réaliser le procédé selon l'une quelconque des revendications 1 à 11 lorsque ledit programme est exécuté sur un ordinateur.

14. Unité de commande (30) configurée pour réaliser le procédé selon l'une quelconque des revendications 1 à 11.

15. Combinaison de véhicules (10) comprenant un tracteur (12), une remorque (14) et une unité de commande (30) selon la revendication 14.
